# EUROPEAN PATENT SPECIFICATION

(11) **EP 0 444 229 B1**
(45) Date of publication and mention of the grant of the patent: **22.09.1993**
(21) Application number: 90103891.9
(22) Date of filing: 28.02.1990
(51) Int. Cl.: B65B 11/32, B65B 35/24, B65B 51/18, B65G 47/31

(54) **High speed wrapping machine to handle delicate products with difficult shapes, which are still on hardening phase**
Hochgeschwindigkeits-Einwickelmaschine für empfindliche Produkte mit komplizierter Form, welche noch in der Aushärtungsphase sind
Machine d'enveloppement à vitesse élevée pour la manipulation de produits délicats avec de formes difficiles, qui sont encore en phase de durcissement

(43) Date of publication of application: 04.09.1991
(73) Proprietor: BFB S.p.A., I-40010 Bentivoglio 2 (IT)
(72) Inventor: Bovina, Stefano, I-40010 Bentivoglio (BO) (IT)
(74) Representative: Rinaldi, Carlo

(56) References cited:
- FR-A- 1 030 446
- FR-A- 1 398 222
- US-A- 2 723 516

## Description

The present invention relates to an automatic machine which is capable of wrapping delicate products such as the soap cakes which have just come out of the plodders. More particularly the invention relates to a machine as above by means of which a wrapping speed of the products may be reached which is much faster than the wrapping speed reached by means of known machines and which is able to prevent the soap cakes from being deformed or abraded.

The invention is not limited to the machines capable of wrapping the soap cakes, but it regards all the machines capable of wrapping delicate products which come out of a system or which are stored in an idle station before being sent to a machine according to the invention. The word "soap cake" will be used below as lexical convenience; it is understood that the soap cake may be replaced by any other product which has similar features of plasticity.

Machines capable of wrapping soap cakes are well known; particularly, wrapping machines are known in which some working members have intermittent movements (machines of the first type mentioned below); further there are wrapping machines in which some working members have intermittent movements and other working members have continuous movements (machines of the second type mentioned below); finally there exist machines in which the working members have only continous movements (machines of the third type mentioned below).

The wrapping machines of the first type cannot attain a very high wrapping speed because of the sudden acceleration to which the product is subjected which the same machines have to wrap.
One of the machines of the first type includes several mechanical members, such as lateral or longitudinal pushers and elevators which co-operate with the pushers to allow the products to be sent to the carriers or to the packaging means in the machine. The accelerations transmitted by the mechanical members tend to damage the products in direct proportion to the degree of acceleration. To avoid the product from being damaged, the wrapping speed has to be maintained at a fairly low level to control the impacts quantitatively and qualitatively of the mechanical members on a delicate product.
The wrapping machines of the second type have limitations due to the fact that they cannot solve the technical problems stated below. In one of these machine the members which have intermittent movements are generally placed between the plodder and the wrapping structure of the machine in which the wrapping process of the soap occurs. Necessarily, the soap cakes in said wrapping structure have a movement which is timed with the movement of the various mechanical members which wrap said soap cakes. For that reason, a carrier (conveyor or chain conveyer) has to be placed between the plodder or another system for feeding soap cakes, and fiducial members have to be in the carrier to time the movement of the soap cakes with the movement of said mechanical members. The intermittent movement of the carrier makes the soap cakes jerk and tends to dent them; further, the soap cakes coming from the plodder or from said system are often placed the wrong way with respect to the fiducial means of the carrier; the inaccurate positioning of the soap cakes on the carrier makes the soap cakes collide with each other and, in extreme cases, activates the safety devices for stopping of machine.

Further, the soap cakes are placed between the fiducial means of the carrier and for that reason move with intermittent movement, and as soon as they arrive at the loading station of the wrapping machine stop (with the carrier, of course) in order to sent to the wrapping structure of the machine. The change-over of the soap cakes from a stationary state to a mobile state with the right wrapping speed is obtained by means of mechanical members (pushers), which act on the soap cakes in a fraction of a second and which may be the cause of permanent deformations of the same soap cakes.

In the wrapping machines of the third type, the product to be wrapped operates at a practically constant speed and without stopping. At the present a wrapping machine of the third type does not solve the problem adequately of how to time the movement of the soap cakes coming from the plodder with the movement of of the carriers placed between the loading station and the wrapping structure of the machine. These carriers, which are structurally like those which are in the above mentioned wrapping machine, are provided with fiducial means for the right positioning of the soap cakes on the same carrier and on the inside of the wrapping structure, but move continuously.

The transition from the system for feeding soap cakes which are located before the carriers to the same carriers is a critical phase of the wrapping process, since it occurs between members which have different speed of translation; for that reason, the right positioning of the soap cakes with respect to the fiducial means may be obtained only if the speed of loading is fairly low; but even this does not prevent the carriers, and more particularly, the fiducial means from being stained with coagulated soap, which can only be removed with difficulty.

The mechanisms in the machines of the first and or the second type consist of some chain conveyors arrenged in sequence, but having translation speeds which change suddenly according to intensity or direction. The passage from one conveyor to another may be the cause of damage to a soap cake because of the strong acceleration to which it is subjected.
Furthermore, the chains wear and stretch; in consequence defects in the timings of the various movements of the machine occur, and frequent and expensive maintenance is necessary to keep the machine in working order.

Finally, the chain conveyers have to maintain fairly low speeds of translation, both in order to decrease wear or to reduce the noise during operation.

FR- A- 1.398.222 discloses a wrapping machine and a process for wrapping of delicate products.

This machine comprises mechanical progress devices for the progress of the wrapping material towards a lifting station; lifting members for lifting wrappings from the lifting station, and pusher devices for moving the wrappings to a wrapping station. A conveyor belt supports the products to be wrapped to move them towards the wrapping station, said conveyor belt being provided with spacing elements which define housings capable of housing products with a predetermined shape before the wrapping of said products. A pusher device is provided which pushes the products from the conveyor belt to the wrapping station and a system of folding members folds the wrappings on the products.

The system of folding members includes folding devices which protect the products during the folding operation of the wrappings.
Furthermore, the machine comprises centering devices to true the wrappings and the products.
Folding mechanisms are provided for folding each one of the wrappings and each one of said folding mechanisms being acted alternatively.
The system of centering devices comprises photoelectric centering elements.

The wrapping process consists of the locating of the wrappings in parallel surfaces on the products, before being wrapped as result of the partial shifting of the wrappings with respect to the products. Next, the parts of the wrapping which form protrusions are folded on the other sides of the products to prevent the protrusion from being pushed by the products; in the end, at least a small part of the folded protrusions is sealed by means of the next protrusion.

Protrusions reinforced by a double folding are provided at at least one of the ends of the products.

FR- A- 1.398.222 does not solve the following problems:
1- the progess of the products and of the wrappings is intermittent and presents straight-line trajectories radiused by right angles; for that reason, acceleration transmitted by the mechanical members tends to damage the products in direct proportion to the degree of the same acceleration.
2- The centering devices integral with the conveyor belt are not capable of housing products of several sizes; for that reason, they may be replaced if the size of the products to be wrapped is changed.
3- The machine is not capable of working the whole process of wrapping delicate products.

The invention as claimed is intended to remedy these drawbacks. It solves the problem of how to design a high speed automatic wrapping machine to handle delicate products with difficult shapes which are still in the hardening phase, by means of which machine the following results are obtained: the whole wrapping cycle is considerably shorter than the corresponding cycle carried on by already existing machines; the products to be treated by means of the machine according to the invention are not damaged; consequently the wrapping cycle does not have to be interrupted to recover and to recycle the damaged products.

The advantages offered by the invention are mainly that the machine suffers very low wear to reduce frequent maintenances and faults in the timing of the various movements of the machine.

A wrapping machine according to the invention comprises substantially:
a central control unit of the machine; an inlet station reached by a first conveyor provided with a plurality of suction cups to carry delicate products from a plodder or from another system for feeding of said products to said inlet station; a first system of conveyors for carrying said products from the inlet station to an inlet position of the machine, the first system of conveyors being provided with spacing members which are placed in sequence at constant distances, the machine being provided with a belt conveyor means for feeding sheets of a thermically weldable wrapping material capable of wrapping said products; wherein the machine further comprises:
a first rotating upper structure and a second rotating lower structure, the rotating structures being capable of rotating in opposite directions of rotation to each other and being held up by a first supporting plate, the rotating upper structure comprising first mechanical elements which translate from the inlet position to a position in which a second system of conveyors and thermic welding devices begins, the rotating lower structure comprising second mechanical elements which translate from the inlet position to a position in which a first straight-line trajectory ends, said first and second mechanical elements moving along straight-line and circular trajectories; the mechanical elements of both of the rotating structures cooperating each other to transport the product along a straight-line trajectory and wrapping the product on three sides by means of the wrapping material, the other sides of the product being wrapped whilst the products are being transported by the mechanical elements of rotating upper structure; primary bending members for folding of the wrapping material wrapped by the mechanical elements on three sides of the products and for placing of two superimposed edges of the wrapping material on a fourth side of the product; primary thermic welding devices to weld the superimposed edges folded by said primary bending members; wrapping devices for wrapping of the wrapping material on the sides of the product in order to finish the wrapping of the product by means of the wrapping material; the second system of conveyors and thermic welding devices being capable of finishing the welding of the wrapping material wrapped on the sides and to carry the packed products to an outlet station of the machine.

Preferably said first system of conveyors comprises a central belt and two lateral belts; at least one of said belts having a smooth supporting upper plane which lies at a height which is very close to that of the lower side of a product when said product is held by one of said suction cups; the belts being moved by means of operating devices at a constant speed of translation, which is very close to the speed of translation of the belt conveyor both with regard to the intensity and direction; the supporting plane having a transverse size smaller than the size of the product considered in the direction of the translation of the belts and lying in a plane which a little higher than the plane of the belt to which it belongs; the belts provided with the supporting plane being shorter than the other belts and not reaching the inlet position of the machine.

Advantageously the longest belts move at a speed of translation which is slightly higher than the speed of translation of the shortest belts, in order to allow the products to be correctly positioned in the spacing members; the longest belts are provided with fiducial elements protruding perpendicularly to the lying plane of the longest belts which define housings for the products delimited by the soil walls of the fiducial elements; the fiducial elements operating on the product which is laid on the belts to bring one side of said product into contact with said wall, the contact occuring in a midling position which is between the inlet station and the inlet position of the machine; the fiducial elements being timed with the mechanical elements to allow the products, which have reached and crossed the midling position, to be timed with the mechanical elements of the machine.

Each one of the fiducial elements, which belongs to a longest belt, is perfectly aligned with a fiducial element of the other longest belt in a direction perpendicular to the direction of translation of the belts.
The first upper rotating structure is an upper wheel comprising a first plurality of slides which hold first carrying lever members rotating with the upper wheel; the second rotating lower structure is a lower wheel comprising a second plurality of slides which hold second supporting lever members rotating with the lower wheel; the first carrying lever members co-operating with the second supporting lever members to move the products from the inlet position to the outlet station of the machine; the first carrying lever members being provided with pincer means designed to draw a sheet of wrapping material from the conveyor belt means by seizing a first edge of said wrapping material while one of said lever members is moving from a first angular position to a second angular position, said conveyor belt means being located between said angular positions; the pincer means keeping the wrapping material in touch with three sides of the product and releasing the first edge during the translation of the first carrying lever members from the inlet position to an ending position located before said primary bending members, to wrap three sides of the product by means of the wrapping material.

The first carrying lever members present a plane surface turned towards the outside of the wheel, said plane surface resting without being pushed on the upper side of the product wrapped by means of the wrapping material; the second supporting lever members having a supporting plane surface on which the lower side of product leans, said lower side being not yet welded by the material; first mechanical devices being provided for maintaining the first carrying lever members parallel to itself, while said lever members move along a first straight-line trajectory; first mechanical device being provided for maintaining the second supporting lever members parallel to itself, while said supporting lever members move along a second straight-line trajectory, the second trajectory lying parallel to the first trajectory; the trajectories beginning at the inlet position and ending in the ending position; the trajectories being covered by said lever members at a practically constant speed.

The first lever members are integral with lever devices provided with arms for supporting of the product and for wrapping of three sides of the product by means of the wrapping material; the lever devices having elastic means for maintaining of the arm in contact with two sides of the product for recovering of the dimensional differences due to the form tolerances of the products; the lever devices being shaped to prevent said material from being wrinkled; cam contours made in the supporting plate being mechanically connected to said lever to control the movements of said lever devices.

The primary bending members for folding of an edge of the wrapping material on a fourth side of the product comprise a folding lever journaled on a pin supported by the supporting plate; said folding lever being placed near a first circular trajectory crossed by the first carrying lever members and radiused to the first straight-line trajectory; an operating mechanism moving the folding lever from a first position to a second position and vice-versa; the folding lever having a curved end which brings the edge of the wrapping material into contact with a side of the soap cake.

The primary thermic welding devices lie parallel to a third straight-line trajectory crossed by the first carrying lever members and radiused to the first circular trajectory; said primary thermic welding devices being provided with a movable safety device which sends a flow of cold compressed air to a heating surface when the machine is stopped; said primary thermic welding devices being also provided with a sharp edge which folds the edge of the wrapping material on the fourth side of the product and brings the first edge into contact with a second edge folded by the folding lever; a cooling bar cools the first edge welded to second the edge by means of the heating surface, said cooling bar being located after the heating surface and lying parallel to the third straight-line trajectory; after the work of said primary thermic welding devices and of said bar the wrapping material being shaped as a tubular structure, the lateral ends of which are still open.

The wrapping devices comprise two oscillating folding levers journaled on a shaft which develops in a direction perpendicular to the direction of a fourth straight-line trajectory crossed by the first carrying lever members and radiused to a second circular trajectory; the shaft being connected to a kinematic mechanism which moves the ends of the folding levers simultaneously from a first position to a second position and viceversa; pushers placed at the ends of the folding levers operating two parts of the wrapping material which are still open to fold them towards the inside of the tubular structure, this action occuring while the folding levers reach the second position; near the upper wheel and more precisely in a portion of the a fourth straight-line trajectory two primary sharp stationary folding edges being placed, each one of which is provided with a sharp edge capable of folding a part of the wrapping material opposite those folded by the pushers while the product carried by a carrying lever member is in contact with said sharp edge; two secondary sharp stationary folding edges being provided to finish the wrapping of the product.

The second system of conveyors and thermic welding devices consists of a third and a fourth carrier; the third carrier comprising two lateral belts shut on driving wheels; two plates operating the active sides of the lateral belts, respectively, which plates extend longitudinally along a substantial length of the belts; said plates being stressed to lean against the respective belts by elastic devices to increase the adhesion between the surfaces of the lateral belts to which two lateral sides of the product are engaged and the same sides; the third carrier being provided with an inlet next to the cam contour causes said lever to move in a release position in order to allow the translation of the product from the the carrying lever member to the carrier; said cam contour maintaining the contact between the arm of the lever and the side of the product to compel the product to translate towards the inlet of the third carrier; said third carrier being also provided with an outlet which lies near the inlet of the fourth carrier; said fourth carrier consisting of two very thin lateral elastic belts, which are good heat conductors and which are closed, respectively, between two pairs of driving wheels; heating plates being placed near the inlet of said carrier and in its active side and in the reversal part of the belts: the heating plates being capable of making the belts move which slide on said plates and of supplying the heat to weld the part of the material, which has not yet been welded, successively to said plates, but only in the active parts of said metallic belts, a pair of cooling members being placed, on which the inside part of the belts leans so as to slide; the fourth carrier being provided with an outlet which lies near the inlet of a fifth carrier; which moves the wrapped products away from the machine.

The upper wheel comprises a first plurality of radial guides; a first slide being housed slidably in each one of said radial guides, said slide being integral with a first end of a shaft, the second end of which holds a bearing inserted in a first grooved contour, said first contour developing in a second plate integral with the supporting plate; the first grooved contour being closed on itself and co-operating with the bearing to define the radial movements of the slide; the configuration of the grooved contour defining the straight-line trajectories and the circular radiusing trajectories covered by the slide, an end of which lies in the external part of the upper wheel; the lower wheel comprising a second plurality of radial guides; a second slide being slidably housed in each one of said radial guides, said slide being integral with a first end of a shaft, the second end of which holds a bearing in a second grooved contour; said second contour developing in a third plate integral with the supporting plate; said second contour being closed on itself and co-operating with the bearing to define the radial movements of the slide, the configuration of the second grooved contour defining the straight-line trajectories covered by the slide, an end of which lies in the external part of the lower wheel.

The end of the first slide, which lies in the external part of the upper wheel, supports a first pin to journal said first external end to one end of said first carrying lever member; the carrying lever member being provided with a first arm delimited by a plane surface and with a second arm which is integral with a first end of a first shaft, the second end of which holds a first bearing, said first bearing being inserted in third grooved contour which develops in the plate; the third contour being closed on itself and co-operating with the first bearing to maintain the plane surface of said lever member parallel to itself while said first external end of the slide is moving along the straight-line trajectories; the end of the second slide which lies in the external part of the lower wheel supporting a second pin to journal said second external end to the supporting lever member; the supporting lever member being provided with a first arm delimited by a plane surface and with a second arm integral with an end of a second shaft, the second end of which supports a second bearing, said second bearing being inserted in a fourth grooved contour; the fourth grooved contour being closed on itself and co-operating with the second bearing to maintain the plane surface parallel to itself while said second external end of the slide is moving along the trajectories.

The first lever device has a second arm, the second end of which supports a pin for a roller which comes into contact with a fifth cam contour which develops along the peripheral contour of the plate and which is closed on itself; the roller being mechanically constrained to move along said contour which is so shaped to co-operate with the roller in order that when said first carrying lever member is in inlet position the arm is removed from the product and when said member is in said ending position said arm seizes the product, the seizing position of the arm being maintained until said member reaches said second system of conveyors and thermic welding devices; the second lever device comprising a second lever arm the end of which holds a pin for a roller which is inserted in a sixth grooved contour; the sixth grooved contour developing in the plate and being closed on itself; the roller being mechanically constrained to move along the contour which is so shaped to co-operate with the roller in order that when said member is in said inlet position the arm is removed from said product and when the member is in said ending position the arm seizes the product wrapped by the material so as to insert the product in said second system of conveyors and thermic welding devices.

At least one of said lever devices is provided with a pin; said pin having an elastic articulation and being located between said arm and a pin.

The pins of the lever devices are in opposition with respect to the arms of the relevant levers; the pin being located in the part in which the arm is placed and the pin being located in the part in which is placed.

The number of said first radial guides is the same as the number of said second radial guides, the radial sizes of the upper wheel being identical with the radial sizes of the lower wheel.

The safety device of the primary thermic welding devices comprises a jack provided with a rod integral with a heating bar and with a plunger integral with a wall of a housing; the jack being provided with a first control device connected to the central control unit of the machine; said jack moving said bar from a first position to a second position and vice-versa; when the jack is in the first position, the surface contacts the folded edges to weld said edges; when the jack is in the second position, the surface is removed from said edges of the wrapping material.

A frontal surface of the heating bar has notches which house, respectively, thin metallic strips stretched between two supporting members and having a very low heat capacity enabling them to be heated or cooled in a very short time; the function of the metallic strips being to support the product when the bar is lying in second position; the bar comprising a plurality of canalizations made in the body of the bar, the inlets of which are connected to a hose-pipe for compressed air, the outlets of the canalizations being connected to discharging orifices, the function of which is to spray cold air to the strips; the hose-pipe being also connected to an air compressor and being provided with taps operated by a second control device to send or to intercept a flow of cold compressed air to the strips; the air being intercepting when the bar is lying in said first position and the sending being actuated when said bar is in said second position.

Other features, aims and advantages of a machine according to the invention will be better understood by refering to the enclosed drawings which refer to non-restrictive examples in which:
- Fig.1: represents schematically an inlet part for the products into a machine according to the present invention;

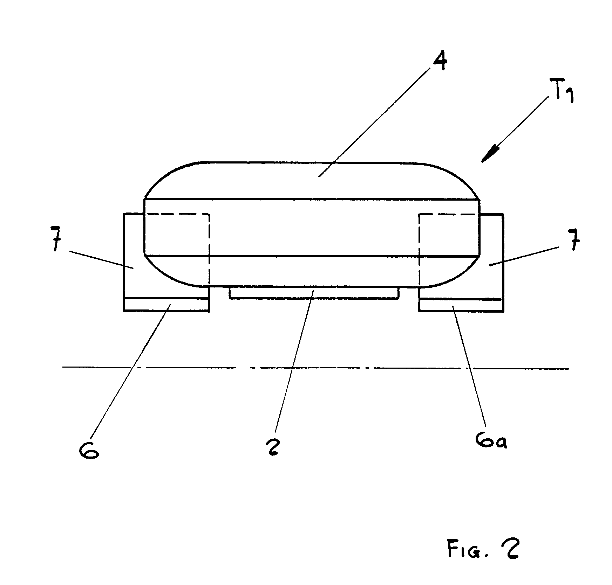

- Fig.2: is a frontal view of a constructive part of a first system of carriers for soap cakes in a first embodiment of said system;
- Fig.3: is a lateral view of the system shown in Fig.2;
- Fig.4: is a plan of the system shown in Fig.2;
- Fig.5: is a lateral view of the whole system of carriers;
- Fig.6: is a frontal view of a working part of a machine according to the present invention;
- Fig.7: is a cut-away view with the planes E-E of the part of the machine shown in Fig.6;
- Fig.8: is a constructive part, in a different scale, of the working part shown in Fig.6 with a soap cake in a first position;
- Fig.9: is a constructive part, in a different scale, of the working part shown in Fig.6 with a soap cake in a second position;

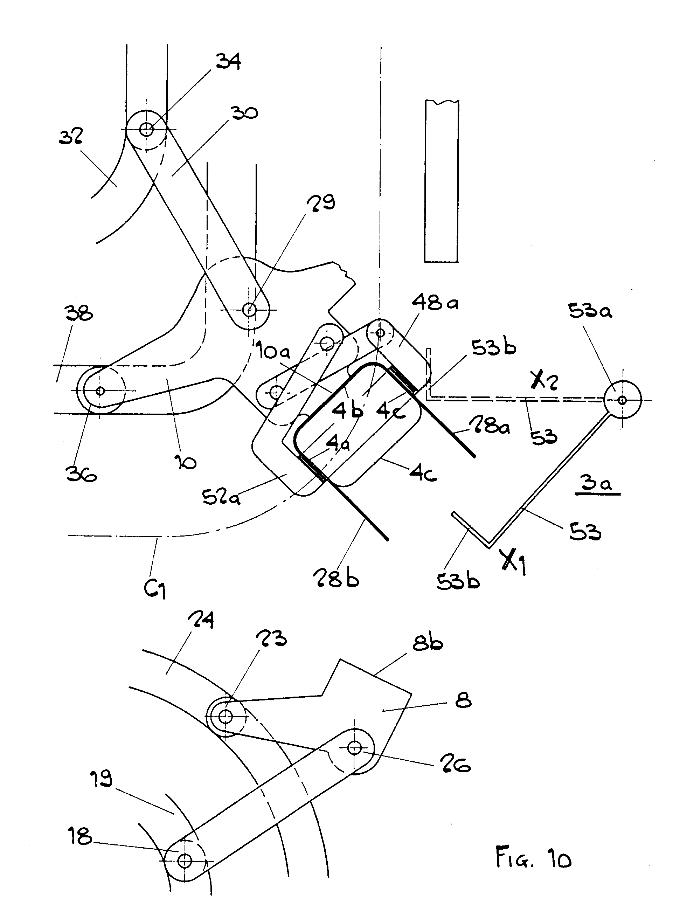

- Fig.10: is a constructive part, in a different scale, of the working part shown in Fig.6 with a soap cake in a third position;
- Fig.11: is a constructive part, in a different scale, of the working part shown in Fig.6 with a soap cake in a fourth position;
- Fig.12: represents schematically a device which finishes the folding of the wrapping of a soap cake;
- Fig.13: represents, in a different scale, a detail of the device shown in Fig.12;

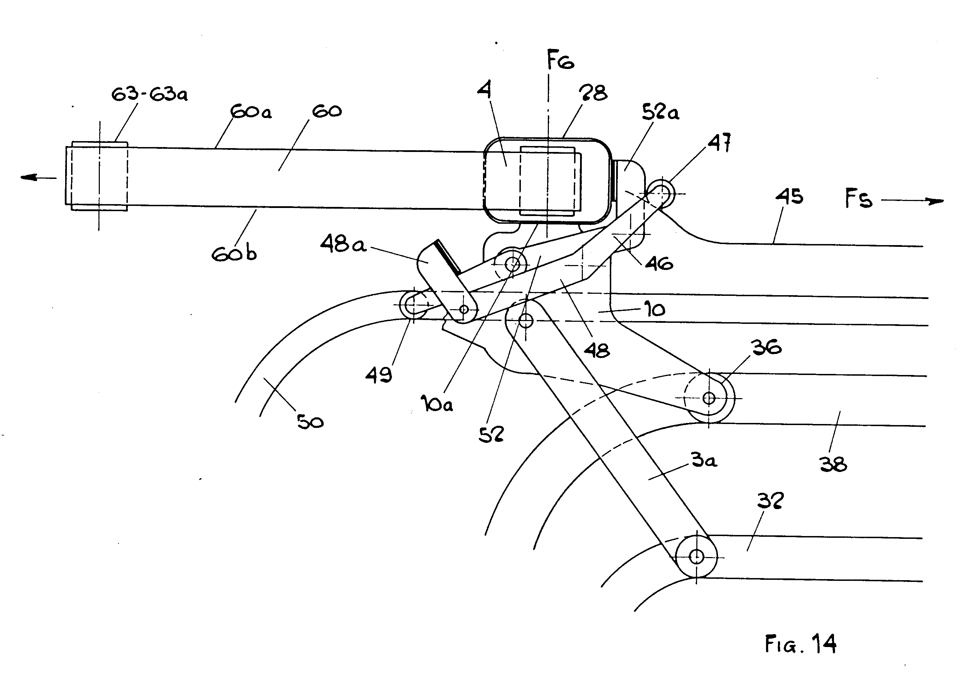

- Fig.14: represents the outlet part for a soap cake from the working part of a machine according to the invention;
- Fig.15: represents a plan of a constructive part of a transport device in the outlet part of the machine;
- Fig.16: represents schematically the assembly drawing of the machine according to the invention;
- Fig.17: represents a welder for the wrappings of the wrapped soap cakes;
- Fig.18: represents a part of said welder;
- Fig.19: represents a part of said welder;
- Fig.20: represents a constructive part of a wrapping device in the machine; which device is provided with control levers shown in a first release position for a soap cake;
- Fig.21: represents the part shown in Fig.20 but with the control levers in a seizing position for a soap cake;
- Fig.22: is a frontal view of a first system of carriers for soap cakes in a second embodiment of said system;
- Fig.23: is a lateral view of the system shown in Fig.22.

The figures show a high speed automatic machine for delicate products with difficult shapes which are still in the hardening phase, or constructive parts of said machine.

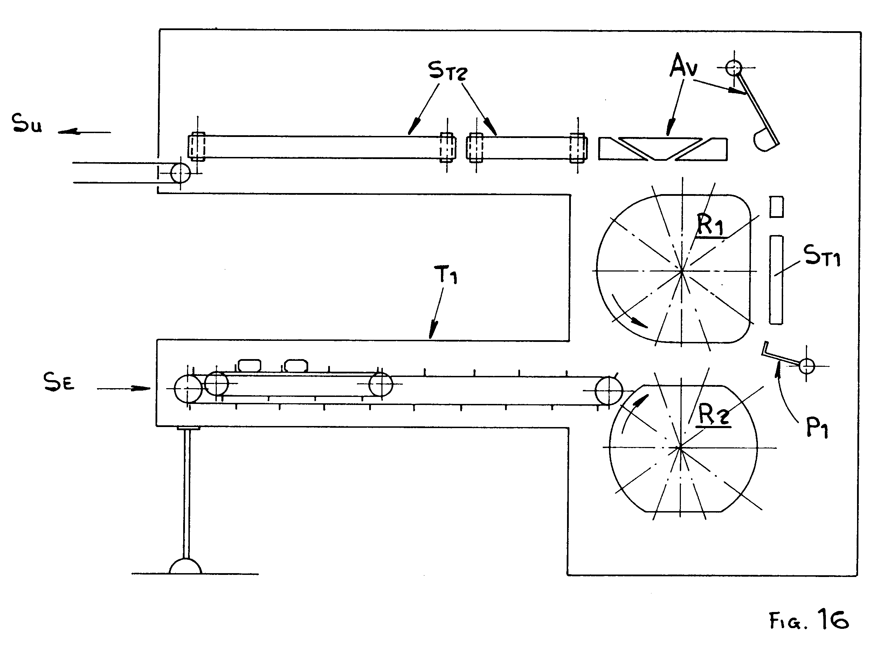

The whole of the machine is shown in Fig.16. Said machine comprises essentially an inlet station S_{E}, a first system of conveyors T₁, a first rotating upper structure R₁, a second rotating lower structure R₂, said first structure R₁ and said second structure R₂ being able to rotate in opposite directions of rotation to each other and being held up by a supporting plate, primary bending members P₁, primary thermic welding devices S_{T1}, wrapping devices A_{V} to finish the bending of the products by means of a wrapping material, a second system of conveyors and thermic welding device S_{T2}, and an outlet station S_{U}.

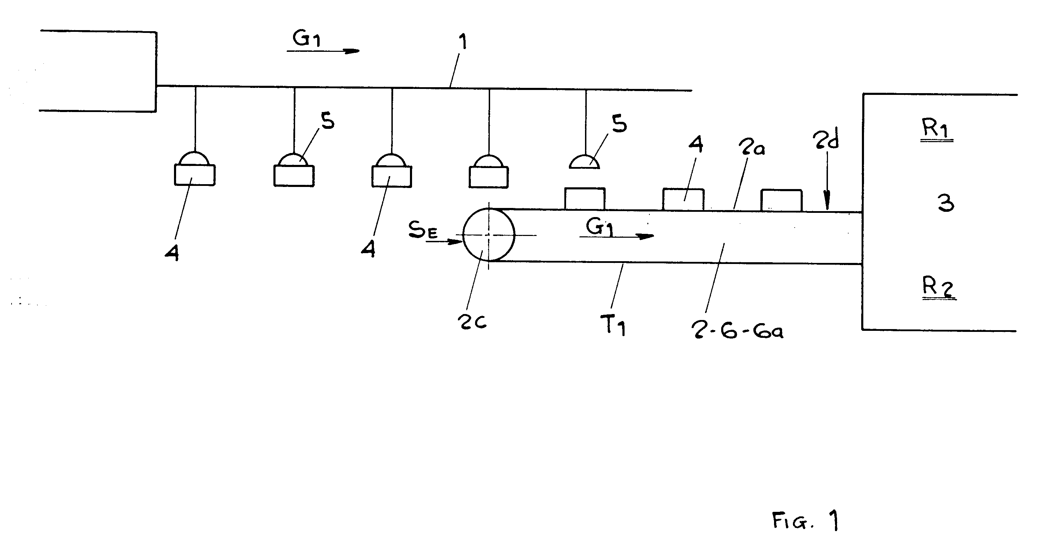

As shown in Fig.1, a belt conveyer 1 carries soap cakes 4 from a plodder or from another system (not shown) for feeding soap cakes to the inlet station S_{E}; the belt conveyer 1 is closed on itself and is provided with members (not shown) for its progress at a constant speed in the direction G₁ and its return; the belt conveyer 1 is provided with a plurality of suction cups 5 which are in sequence and with known feeding and discharging systems of the vacuum for the suction cups 5.

Each one of the suction cups 5 is capable of holding a soap cake 4 and to put it down by discharging the vacuum in the due position, on the system of conveyors T₁ below (in Fig.1 shown with 2, 6 and 6a), the bearing upper section 2a of which is moved by a roller 2c in the direction of the arrow G₁ at a constant speed of translation of the belt conveyer 1 in intensity and direction. Further, the suction cups 5 hold the soap cakes 4 at a height considerably near the height of the upper plane 2a of the system T₁. The soap cakes 4 moves gently from the suction cups 5 to system 1 T₁ because of the negligible differences in speed and in height between the belt conveyor and the system T₁.

System 1 translates towards the structures R₁ and R₂, which comprise the machine of Fig.1, at a constant speed V₁ to prevent the soap cakes 4 from being make to jerk.
From Fig.1 it may be seen that the system of conveyors T₁ comprises a central belt 2 capable of supporting the soap cakes 4 and two lateral belts 6 and 6a. The central belt 2 has a smooth supporting upper plane 2d, a transverse size smaller than the size of the soap cake 4 considered in the direction of the translation of the belt 2; addition the belt 2 lies in a plane which is a slightly higher than the plane in which the lateral belts 6 and 6a lie.

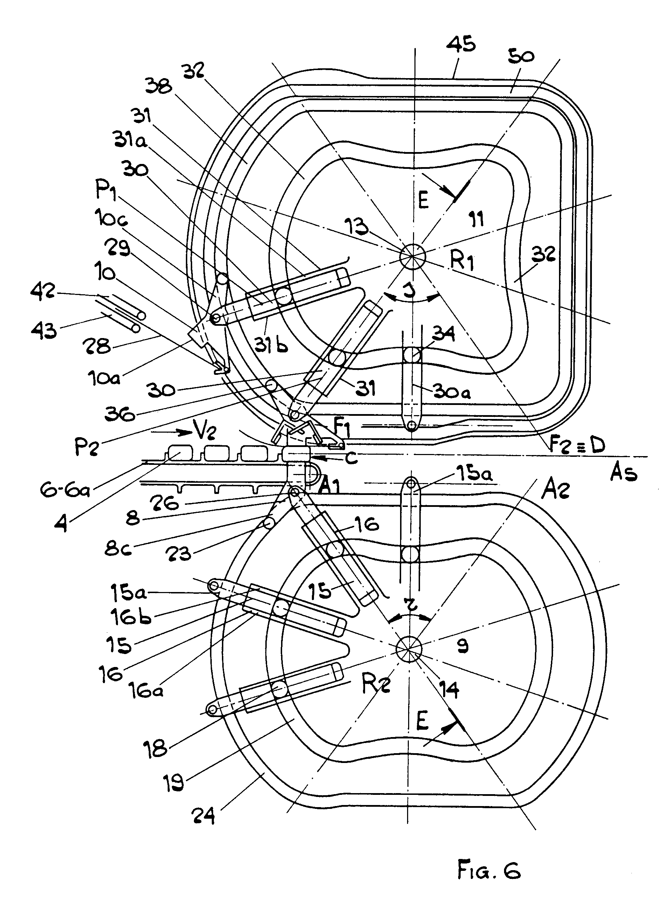

Belt 5 is shorter than belts 6 and 6a and does not reach the inlet station S_{E} of the machine 3, as shown in Fig.5.

Driving wheels, not shown, are kinematically connected to the lateral belts 6 and 6a to move the same belts at a constant speed of translation V₂ which is slightly higher than V₁.

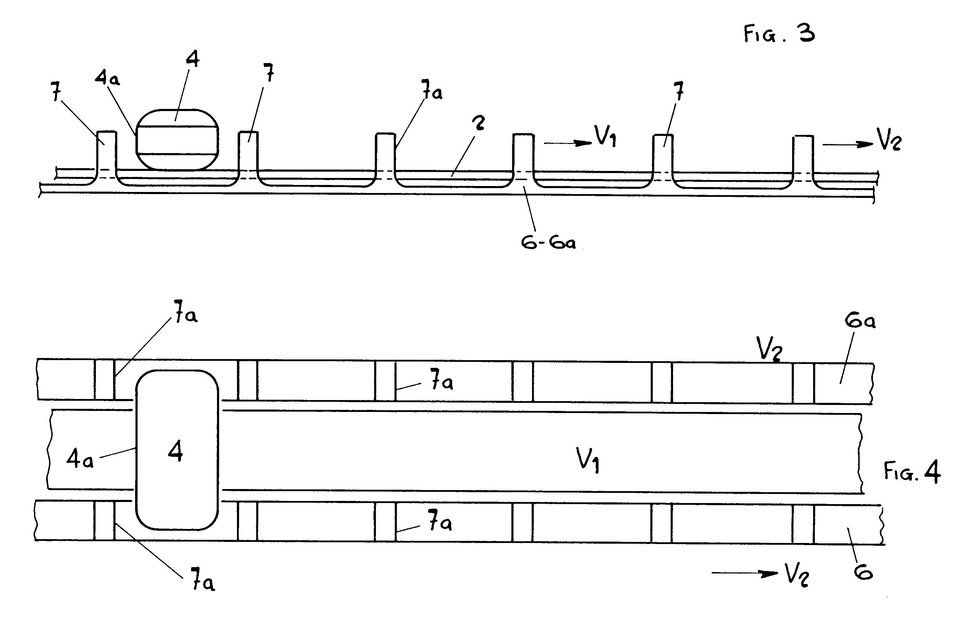

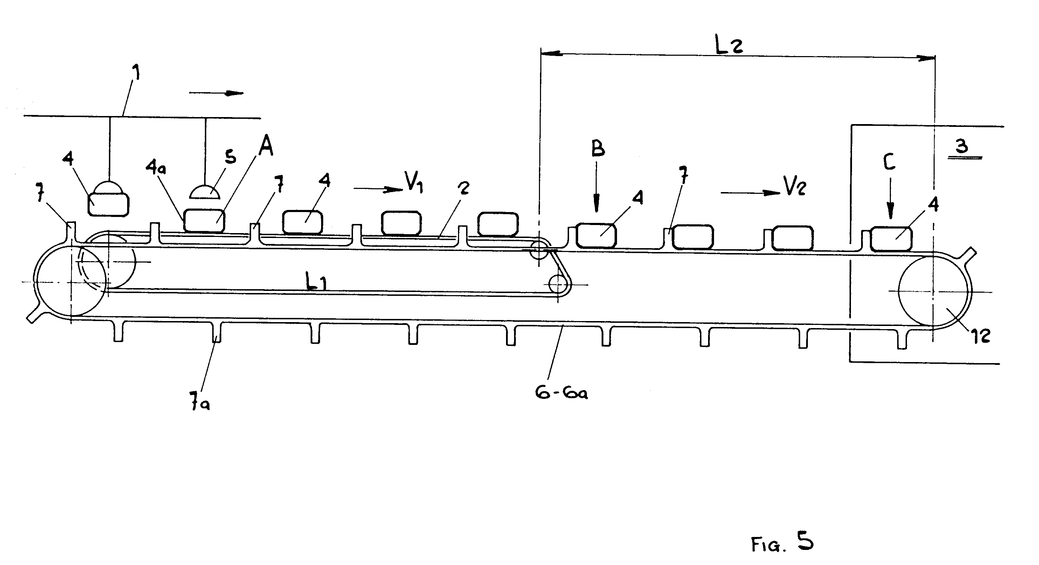

Both belts are provided with fiducial elements 7 which are preferably small blocks of rubber or another material which is as soft as rubber to prevent the soap cakes from being damaged (Figs. 3 and 4). The fiducial elements 7 are formed as protuberances of belts 6 and 6a, protruding perpendicularly to the lying plane of the same belts. The fiducial elements 7 are placed in sequence on both belts 6 and 6a at constant distances which are much greater than the longitudinal size D_{L} of a soap cake 4 considered in the direction of the translation of the belts; in addition each of the fiducial elements 7 of belt 6 is perfectly aligned with a fiducial element 7 of belt 6a in the direction D₁ perpendicular to the direction of translation G₁ of of belt 2, 6 and 6a. Walls 7a of the fiducial elements 7 define housings 7b for the soap cakes 4.

The kinematics of belts 2, 6 and 6a and of the fiducial elements 7 facilitates the right final positioning of a soap cake 4 on the system of conveyors T₁, even if the initial positioning of the same soap cake is not right.
The right positioning of a soap cake 4 is defined by the walls 7a which contact a side 4a of a soap cake 4 on the length of the belt 2 because of the slipping of the belts 6 and 6a with respect to belt 2.

Fig.5 shows how the right positioning of a soap cake 4 is reached. At the beginning of length L₁ of the belt 2, a suction cup 5 releases a soap cake 4 in a first position A of the belt 2; since the speed of translation of the belt 2 towards the machine 3 is slightly lower than the speed of translation of the belts 6 and 6a and of the fiducial elements 7 in the same direction, even if the soap cake 4 is not correctly positioned on the belt 2, it is in any case reached by two fiducial elements 7 which belong to the belts 6 and 6a. The two fiducial elements 7 act on the soap cake 4 so as to bring the walls 7a into contact with a side 4a; this contact occurs in a second position B as shown in Fig.5. Since the fiducial elements 7 are timed with the kinematics of the machine 3, the soap cakes 4 which have reached and crossed the position B are also timed with the kinematics of the machine 3.

In the length L₂ covered by the system of conveyors T₁ the transferal of the soap cake 4 achieved enterely by belts 6 and 6a. The soap cake 4 is placed between two fiducial elements 7 of the belts 6 and 6a. From the position B external to the machine 3, the soap cake 4 is moved by the belts 6 and 6a in the third position C internal to the machine 3 in which mechanisms are provided which receive the soap cake 4 and which operate the wrapping process on the same soap cake 4.

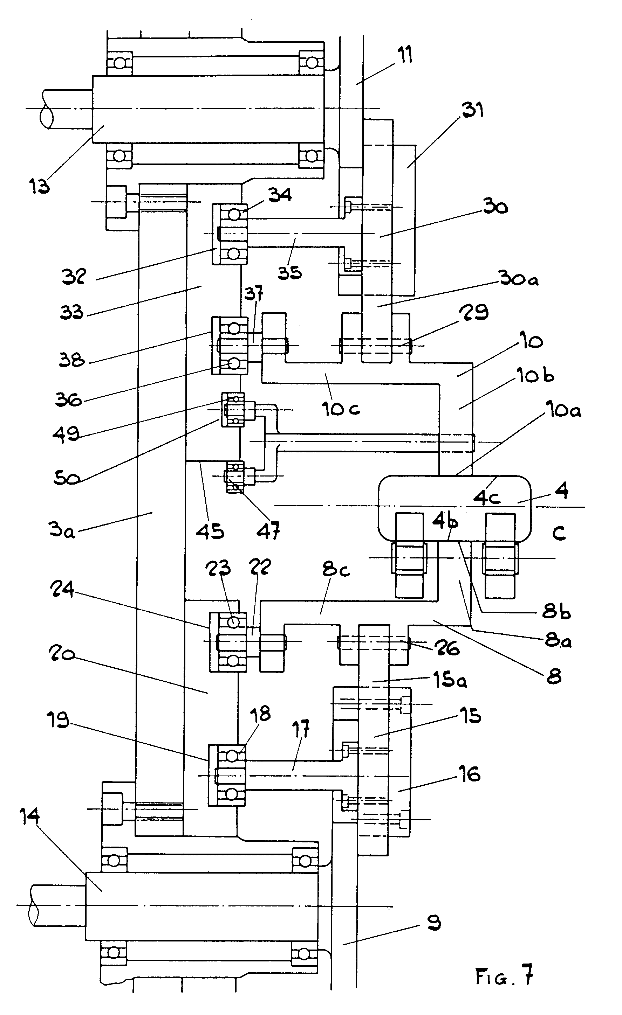

In the inside of the machine 3 are located driving wheels 12 for the belts 6 and 6a as shown in Fig.6.

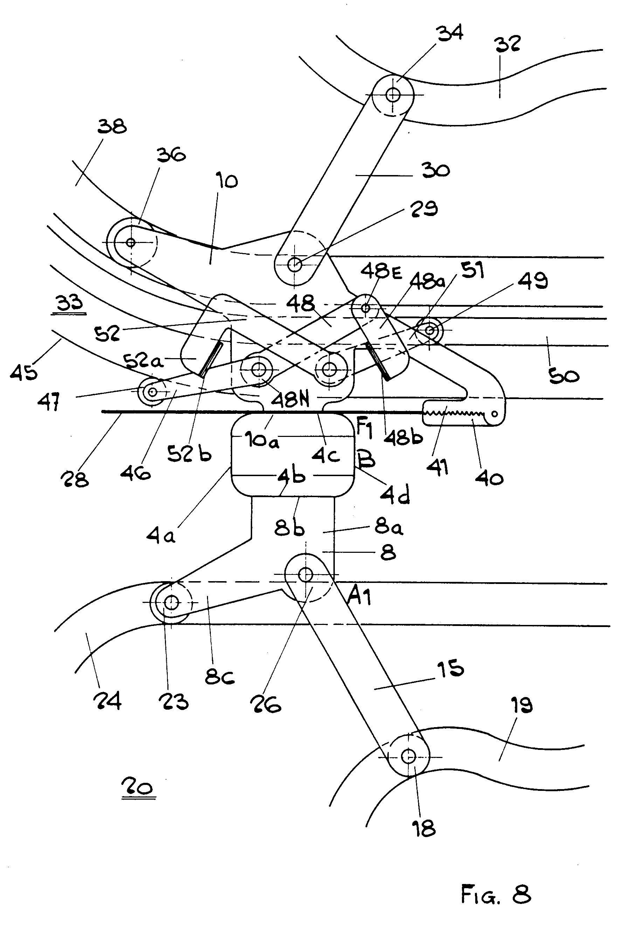

In Fig.6 the rotating upper and lower structures R₁ and R₂ of Fig.16 are shown in detail and in a frontal view, which structure comprise the machine 3; in Fig.7 the rotating upper and lower structures R₁ and R₂ are shown in a cut-away view with the plane E-E defined in Fig.6.

The lower structure R2 is a lower wheel 9 integral with a first shaft 14 journaled by a supporting plate 3a and kinematically connected to a motor, not shown, to rotate with the wheel 9. The wheel 9 comprises ten radial guides 16 each one of which is delimited sideways by means of two slide gibs 16a and 16b. Each one of the guides 16 houses slidably a slide 15 provided with an external end 15a which protrudes from the guide 16 and which holds a pin 26 of a supporting lever member 8. A plane surface 8b turned towards the outside of the wheel 9 delimits a first arm 8a of member 8, the function of which is to sustain one side 4b of a soap cake 4 which has reached position C.

The radial movement of the slide 15 are defined by a bearing 18 (Fig.7) held at one end of a shaft 17 integral with the slide 15.
The bearing 18 is inserted in a first grooved contour 19 which develops in a plate 20 integral with the supporting plate 3a and which is closed on itself. The bearing 18 is mechanically constrained to move in the contour 19 which is shaped to co-operate with the bearing 18 in order that the external end 15a of the slide 15 moves in a first straight-line trajectory A₁-A₂ while the wheel 9 is rotating.

The straight-line trajectory A₁-A₂ starts from position C and lies parallel to the axis Aₛ of a soap cake 4, said position C being reached by the member 8 in the exact moment in which it is reached by a soap cake 4 carried astride between the belts 6 and 6a.

It should be noted that the direction and the speed of rotation of the wheel 9 are chosen, in the trajectory A₁-A₂ or at least in the position C, so that the speed of translation of the end 15a has the same direction and an intensity very close to the intensity of the speed of translation V₂ of the belts 6 and 6a to avoid the soap cake 4 from being suddenly accelerated or impacted while it is moving from the belt 6 and 6a to the surface 8b.

The surface 8b lies parallel to itself while the supporting member 8 is moving on the trajectory A₁-A₂ with translatory movement. For that reason, the lever member 8 is provided with a second arm 8c which supports a shaft 22; at the free end of the shaft 22 is fixed a bearing 22 inserted in a second grooved contour 24, which develops in the plate 20 and which is closed on itself.

The bearing 23 is mechanically constrained to move in the contour 24 which is shaped to co-operate with the bearing 23 in order that, along the trajectory A₁-A₂ the surface 8a is maintained parallel to itself.

The shaft 14 and the pin 26 have axes of symmetry parallel to each other and are set at such a distance that, while the wheel 9 is rotating the translatory movement of the member 8 along the trajectory A₁-A₂ is a straight-line movement with a nearly constant speed and very near the speed of translation V₂ of the belts 6 and 6a; for that reason while the belts 6 and 6a are rotating round the driving wheels 12, a soap cake 4 leans on the surface 8b, the inertial frame of reference of which is nearly identical with the inertial frame of reference of the belts 6 and 6a.

The lower wheel 9 co-operates with an upper wheel 11 (also indicated above as the upper structure R₁) to wrap the soap cake 4.

The upper wheel 11 is integral with a second shaft 13 journaled by the supporting plate 3a and kinematically connected to a motor, not shown, to rotate with the wheel 11.
The wheel 11 comprises ten radial guides 31 each one of which is laterally delimited by means of two slide gibs 31a and 31b. Each one of the guides 31 houses slidably a slide 30 provided with an external end 30a, which protrudes from the guide 31 and which holds a pin 29 of a carrying lever member 10.

In Fig.5 are shown two guides 31 with the relevant slides 30; a first slide 30 is shown in the angular position P₁ and a second one is shown in the angular position P₂.
A plane surface 10a turned towards the outside of the wheel 11 delimits a first arm 10b of the member 10 and rests, without being pushed, on a side 4c of the soap cake 4 which is in the position C.

The radial movements of the slide 30 are defined by a bearing 34 (Fig.7) held at an end of a shaft 35 integral with the slide 30.
The bearing 34 is inserted in a third grooved contour which develops in a plate 34 integral with the supporting plate 3a and which is closed on itself. The bearing 34 is mechanically constrained to move in the contour 32 which is shaped to co-operate with the bearing 34 in order that the external end 30a of the slide 30 moves in a second straight-line trajectory F₁-F₂ while the wheel 11 is rotating.
The straight-line trajectory F₁-F₂ starts from the position C and lies parallel to the axis Aₛ of a soap cake 4; said position C being reached by the member 10 in the exact moment in which it is reached by a soap cake 4 carried astride between the belts 6 and 6a.

It should be noted that the direction and the speed of rotation or the wheel 11 are chosen so that, in the trajectory F₁-F₂ the speed of translation of the end 30a has the same direction and the same intensity as the speed of translation of the corresponding end 15a which moves along the trajectory A₁-A₂.
The surface 10a lies parallel to itself while the carrying member 10 is moving along the trajectory F₁-F₂ with translatory movement. For that reason, the lever member 10 is provided with a second arm 10c which supports a shaft 37; on the free end of the shaft 37 is fixed a bearing 36 inserted in a fourth grooved contour 38 which develops in the plate 33 and which closed on itself. The bearing 36 is mechanically constrained to move in the contour 38 which is shaped to co-operate with the bearing 36 in order that the surface 10a is maintained parallel to itself along the trajectory F₁-F₂.

The shaft 13 and the pin 29 have axes of symmetry parallel to each other and are set a such a distance that, while the wheel 11 is rotating, the translatory movement of the member 10 along the the trajectory F₁-F₂ is straight-line movement with a nearly constant speed and identical with the speed of translation of the member 8 along the trajectory A₁-A₂; further, while the belts 6 and 6a are rotating round the driving wheel 12, the surface 10a of the member 10, the inertial frame of reference of which is nearly identical with the inertial frame of the belts 6 and 6a, leans without being pushed on a side 4c of the soap cake 4.

A third arm 10d of the carrying lever member 10 holds a pin for two pincer means 40 and 41 kinematically connected to a known operating mechanism (not shown) capable of moving said pincer means 40 and 41. While the lever member 10 is lying in the angular position P₁, the pincer means 40 and 41 draw a sheet of wrapping material 28 which is thermically welded from the end of a conveyor belt 42 and 43 turned towards the lever member 10; the sheet will be used to wrap the soap cake 4 during the following working phases of the machine.

Because of the rotation of the wheel 11 the member 10 moves from the angular position P₁ to the angular position P₂; during this angular displacement the known operating mechanism closes the pincer means 40 and 41 to contact the material 28 of the surface 10a. When the member 10 is in the position P₂ which coincides with the position C the material 28 is between the surface 10a and the side 4c of the soap cake 4.

The conveyor belt 42 and 43 lets an edge 28a of the material 28 be seized by the pincer means 40 and 41; for this purpose the belts 42 and 43 move at a constant speed to drive the wrapping material 28 in a speed very close in intensity and direction to the tangential speed of the member 10 which is in the position P₁.

While the upper wheel 11 is rotating in a predetermined angle (s) the trajectory F₁-F₂ covered by the member 10 is parallel to the trajectory A₁-A₂ covered by the member 8 while the lower wheel is rotating in a predetermined angle (r). Further, the speed of translation of the member 10 along the the trajectory F₁-F₂ is identical with the speed of translation of the member 8 along the trajectory A₁-A₂. The is essential for the carriage of a soap cake from the third position C to a fourth position D by means of the members 8 and 10.

The surface 8a of the member 8 holds the side 4b of the soap cake 4 and the surface 10a of the member 10 keeps the material 28 in touch with the side 4c of the soap cake 4. The trajectory F₁-F₂ ends in position D.

The pressures transmitted from the members 8 and 10 to the soap cake 4 have such an intensity that it does not damage the shape of the same soap cake 4, and ensures that it is carried with the material 28.

Advantageously, the radial sizes of the wheel 11 is identical with the radial sizes of the wheel 9; further, the number of slides 30 is the same as the number of slides 15 to prevent the two wheels from being moved at a different angular speed and to maintain the timing of the mechanisms of the slides 30 with the timing of the mechanisms of the slides 15 without using a device to check the timing.

The carrying lever member 10 also moves with a straight-line motion along the trajectories F₃-F₄ and F₅-F₆. Said trajectories are obtained because of the configuration of the contour 32 in which the bearing 34 is constrained. Along both the third trajectory F₃-F₄ and along the fourth trajectory F₅-F₆ the surface 10a of the member 10 lies parallel to the direction defined, respectively, by the same trajectories because of the configuration of the contour 38 in which the bearing 36 is constrained.

The supporting lever member 8 and its surface 8a have the function of supporting cyclically a soap cake 4 along the trajectory A₁-A₂. Along the trajectory A₂-A₁ they are idle.

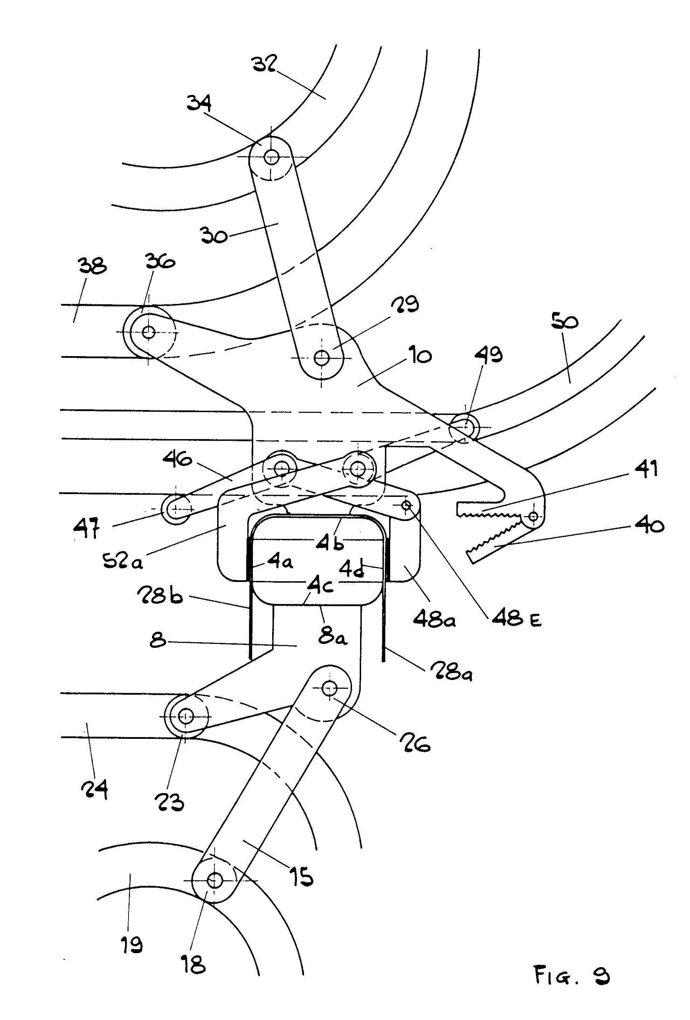

Fig.8 shows in greater detail than in the above mentioned Figures the behaviour of the members 8 and 10 in the position C soon after the soap cake 4 is deposited on the surface 8a coming from the belts 6 and 6a, and shows that the surface 10a has carried the material 28 on one side 4c by co-operating with the pincer means 40 and 41.
Fig.8 also shows a first and a second operating lever 48 and 52 to carry the soap cake 4 from the fourth D to the following positions. The first lever 48 is pivoted on a pin 48N and the second lever 52 is pivoted on a pin 52S, said pins 48N and 52S being integral with the first arm 10b of the member 10. The first lever 48 comprises an arm 48b on the end of which a shimming 48b is glued. The second lever 52 also comprises an arm 52a on the end of which a shimming 52b is glued; said shimmings consisting advantageously of a soft material (for instance foam-rubber).

The first lever 48 is provided with a second arm 49, the end of which supports a pin for a roller 37 which contacts a first cam profile 45 which develops along the peripheral contour of the plate 33 and which is closed on itself. The roller 47 is mechanically constrained to move along the profile 45 which is shaped in such a way as to co-operate with the roller 47; so that when the member 10 is in the position C the arm 48a is removed from a side 4d of the soap cake 4 and when the member 10 is in the position D the arm 40a contacts said side 4d.

The second lever 52 is provided with a second arm 51, the end of which supports a pin for a roller 49 inserted in a sixth grooved contour 50 which develops in the plate 33 and which is closed on itself. The roller 49 is mechanically constrained to move in the contour 50 which is shaped to co-operate with the roller 49, so that when the member 10 is in the position C the arm 51 is removed from the side 4a of the soap cake 4, and when the member 10 is in the position D the arm 51 contacts said side 4d.

Between the arm 48a and the pin 48N is a pin 48E provided with an elastic articulation which is capable of recovering the dimensional differences due to the form tolerances of the soap cakes 4 and to maintain the arms 48a and 52a, respectively, in contact, with the sides 4a and 4d of the soap cake 4.

When the member 10 is in the position D (Fig.9) the two arms 48a and 52a allow the member 10 to carry the soap cake 4 by gripping the soap cake 4 with the interposed shimmings 48b and 52b.

During the translation of the member 10 from position C to position D, the pincer 41 rotates round a pin 44 and opens under the control of the known operating mechanism to free the edge 28a of the material 28.
Simultaneously the levers 48 and 52 move, as mentioned above, so that these embrace the soap cake 4 and wrap it partially with the material 28; thus when the member 10 is in the position D the soap cake 4 is wrapped on its three sides 4a, 4b and 4d with the material 28 and is held by the arms 48a and 52a by interposed shimmings 48b and 52b.
While the wheel 9 is still rotating the member 8 ends its trajectory A₂-A₁ and moves from position D to position C to be ready to carry the next soap cake.

Once the member 10 is over position D it moves with the soap cake 4 along a first circular trajectory C₁ owing to the configuration of the contour 32 in which the bearing 34 is constrained.

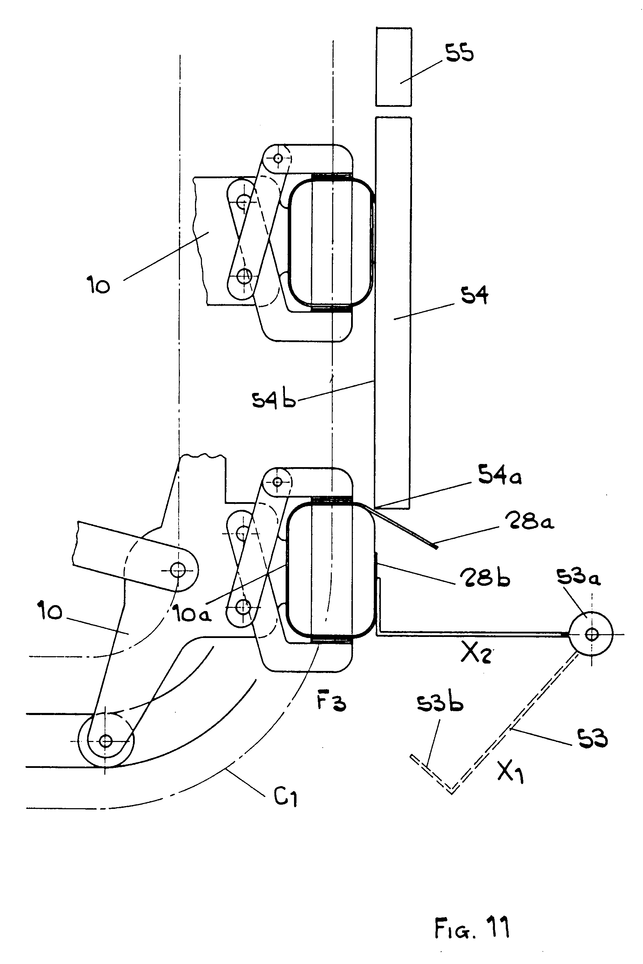

A folding lever 53 is journaled on a pin 33a supported by the plate 3a; advantageously, the folding lever 53 is placed near the circular trajectory C₁ and is kinematically connected to an operating device (not shown) which moves the folding lever 53 from a first position X₁ to a second position X₂ and vice-versa. The folding lever 53 has a curved end 53b which brings into contact the edge 28b of the wrapping material 28 with a side 4b of the soap cake 4. The operating device moves the folding lever 53 from the position X₁ to the position X₂ while the member 10 is running along the circular trajectory C₁, as it is shown in Fig.11.

After this operation four sides are wrapped with the material 20: namely the sides 4a, 4b, 4c and 4d.
However, the edge 28a of the material 28 has to be laid on the edge 28a, which is already properly folded on side 4b. For this purpose, the machine according to the invention is provided with a welding bar 54 supported by plate 3a in a position which allows the welding bar 54 to come in contact with the edge 28a when the member 10 which is running along a section of the straight-line trajectory F₃-F₄, defined by the contour 32 and by the bearing 34, is in front of the welding bar 54. More precisely the superimposition of edge 28a on edge 28b begins the moment the member 10 brings the edge 28a into contact with the sharp edge 54a of the bar 54 and the action is completed while the member 10 is running along the section of the trajectory F₃-F₄, which section is in front of the frontal surface 54b of the bar 54.

The material 28 is one that can be thermically welded; thus while the edge 28a is sliding on the surface 54b, it is welded on the edge 28b.

Soon after the welding bar 54, and preferably in a section of the straight-line trajectory F₃-F₄, there is a cooling bar 55 which cools the welding made by the bar 54 to prevent the welding from being softed. The welding bar 54 has a frontal surface 54a turned towards the upper wheel 11 and lying parallel to the straight-line trajectory F₃-F₄, so that the side 4b wrapped by the edges 28a and 28b slides on the same bar 54 in the period of time required to cool the welding. Further, in standard fashion, the bar 54 is connected to a source of cooling fluid, not shown, to make the thermal exchange which effects the cooling.

Once the welding is finished the wrapping material 28 wraps the soap cake 4 on the four sides 4a, 4b, 4c, and 4d and edge 28a is welded on edge 28b. The wrapping material 28 is shaped like a tubular structure 4t, the lateral ends of which are still open.

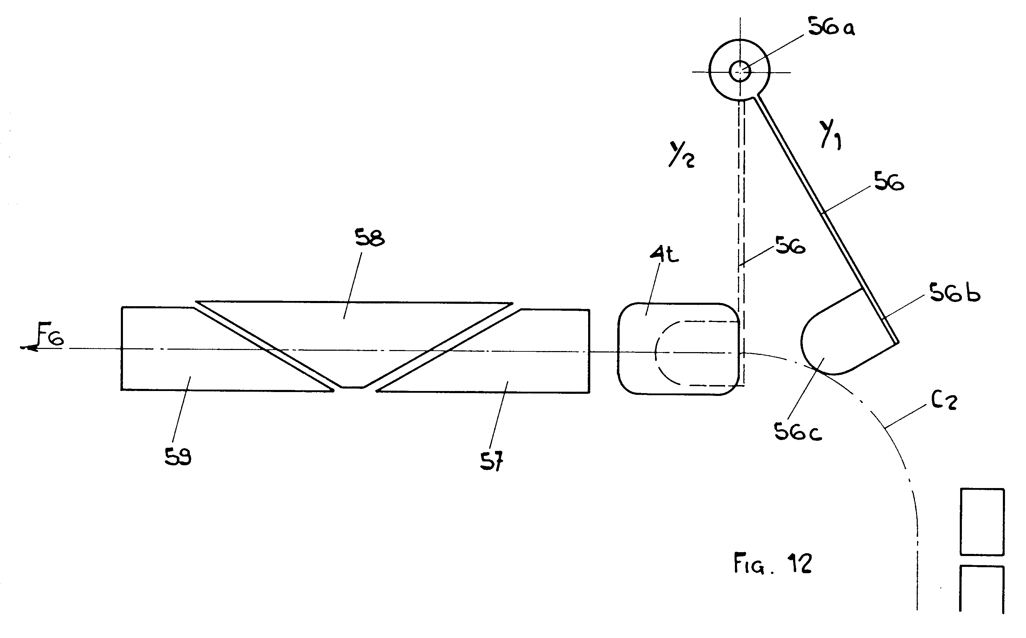

The straight-line trajectory F₃-F₄ to which is radiused a second circular trajectory C₂ (as is shown in Figs. 6 and 12) ends at the end part of bar 55. The trajectory C₂ is covered by the member 10 because of the configuration of the grooved contour 32 in which the bearing 34 is constrained.

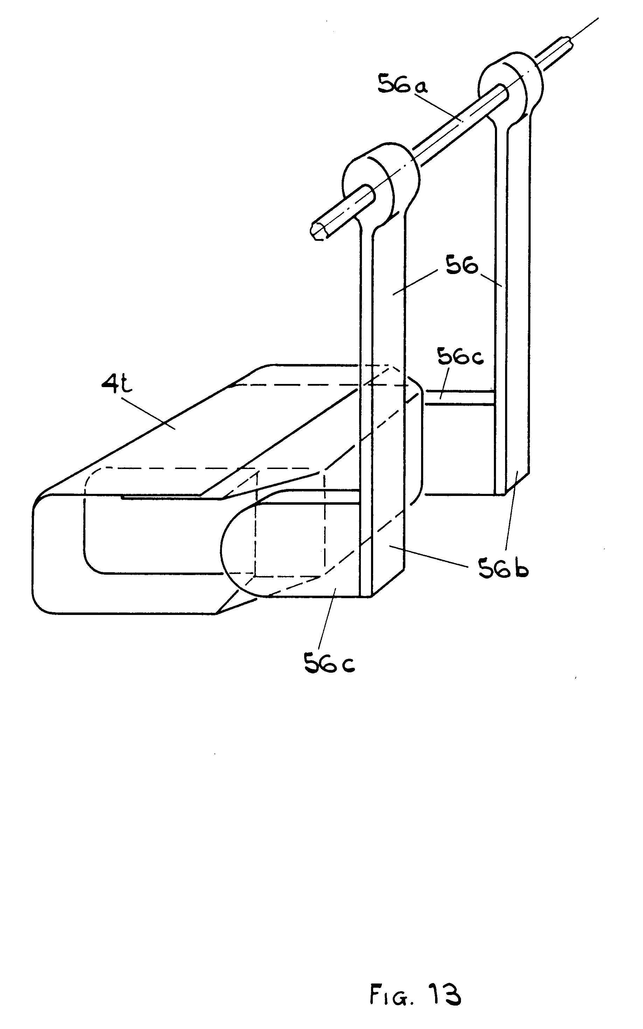

At the end of the trajectory C₂ the fourth straight-line trajectory F₅-F₆ begins, which the member 10 covers because of the configuration of the grooved contour 32 in which the bearing 34 is constrained. The tubular structure 4t is shaped as shown in Fig.13, where the member 10 is not shown since the member 10 is under the tubular structure 4t.
The wrapping of the soap cake 4 is finished by folding the lateral edges of the tubular structure 4t which is made by the partially welded material.
The whole welding of the soap cake 4 is obtained by using two swinging folding levers 56 journaled on a shaft 56a which develops in a direction perpendicular to the trajectory direction F₅-F₆ and which is connected to a kinematic mechanism, not shown, which moves the ends 56b of the folding levers 56 simultaneously from a first position Y₁ to a second position Y₂ and vice-versa. When the pushers 56c placed at the ends 56 of the folding levers 56 are in the second position Y₂, they operate on the lateral ends of the wrapping material 28 which are still open, thereby folding towards the inside of the tubular structure 4t two parts of the wrapping material 28. The parts opposite those which were folded by the pushers 56a are folded in the same way by means of two stationary sharp folding edges 57 which are near the upper wheel 11 in a section of the trajectory F₅-F₆ and with which the soap cake 4 comes into contact when moving with the member 10.

While the member 10 is still moving along the trajectory F₅-F₆ the wrapping of the soap cake 4 is finished by the material 28. For this purpose the stationary folding edges 57, 58 and 59 are used which were described in the Italian Patent No. 906.563 filed on 22.09.70.

In the last section of the trajectory F₅-F₆ the arm 48a of the lever 48, which is placed before the soap cake 4 in the direction of the movement of the wheel 11, moves in the release position because of the configuration of the contour 45 which operates the roller 47 like a cam to allow the soap cake 4 to be moved from the member 10 to the second system of conveyors and thermic welding device S_{T2}.

The configuration of the contour 45 near the last section of the trajectory F₅-F₆ compels the roller 47 to move the arm 40a in the release position.
While the soap cake 4 is being released by the arm 48a, the wrapping material 28 completely wraps the soap cake 4, but it is not welded laterally.
In addition the arm 52a of the lever 52 is still in the position for seizing the soap cake 4 because of the configuration of the contour 50 in which the roller 49 is constrained to move.
This position of the arm 52a of the lever 52 helps the soap cake 4 to move from the surface 10a of the carrying lever member 10 to a third carrier 60 comprising two lateral belts 60a and 60b. Further, the surface 10a remains parallel to itself also along the last section of the trajectory F₅-F₆ to facilitate this transferal.

While the wheel 11 and the slide 30 are rotating the surface 10a is maintained in horizontal position by the bearing 36 constrained in the grooved contour 38; when the surface 10a is near the inlet of the carrier 60, the arm 52a of the lever 52 compels the soap cake 4 wrapped by the wrapping material 28 to move towards the inlet of the carrier 60 and lets the transverse axis Aₛ of the soap cake 4 coincide with the straight line which unites the centres of two first driving wheels 62 and 62a while the plane 52c of the arm 52a is still lying in a vertical position because of the action of the roller 49 constrained in the grooved contour 50.

In addition to the first driving wheels 62 and 62a, two second driving wheels 63 and 63a are provided to move the belts 60 and 60b, the driving wheels 63 and 63a being capable of moving the belts 60a and 60b at a high speed of translation. As soon as the soap cake 4 is lying in the inlet of the carrier 60, the belts 60a an 60b move it away from the surface 10a and thus from the mechanisms of the wheel 11.

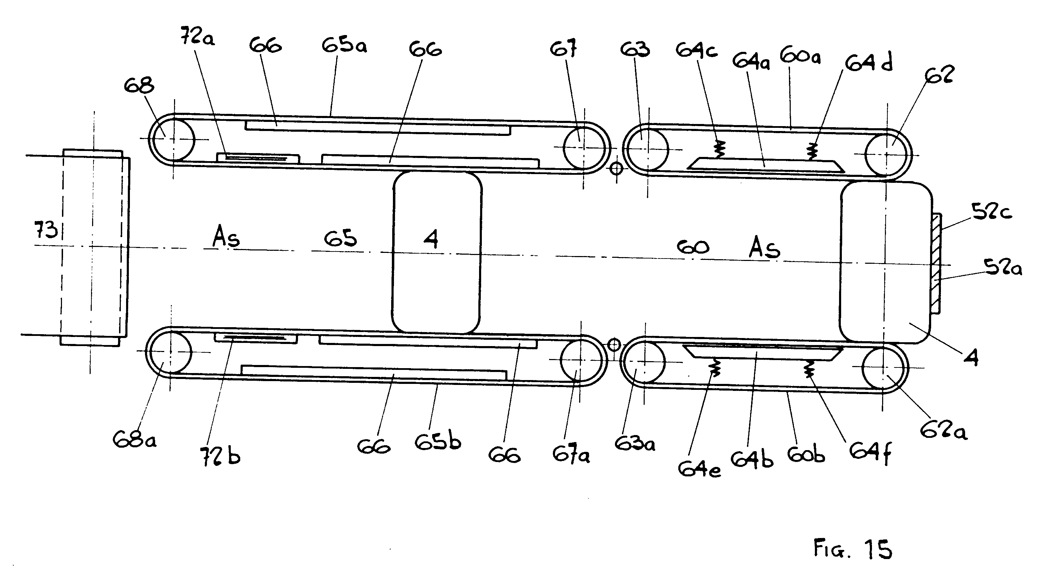

Fig.15 explains the process the soap cake 4 undergoes when it is out of the wheel 11. This process comprises the welding of the lateral parts of the wrapping material 28 and the subsequent cooling of the same welding.

Two plates 64a and 64b, respectively, operate on the active sides of the lateral belts 60a and 60b of the carrier 60, which plates extend longitudinally along a considerable length of the same belts. The plates 64a and 64b are stressed to lean against the rispective belts by elastic means schematically shown as the springs 64c, 64d, 64e and 64f; the surfaces of the plates 64a and 64b which leans against the belts 60a and 60b are not a cause of a measurable friction for the translation of the same belts, but increase the adhesion between the surfaces of the belts 60a and 6ab to which two lateral sides of the soap cake are engaged and the same sides.

The inlet of a fourth conveyor 65 is placed near the outlet of the third carrier 60 and in the same direction of its translation. This is comprises, among the other things, two lateral belts which are, advantageously, very thin metallic elastic belts 65a and 65b, the belts being good heat conductors. The belts 65a and 65b are closed, respectively, between two pairs of driving wheels 67, 68 and 67a, 68a. The inside part of the metallic belts 65a and 65b leans against heating plates 66 on which it slides, the heating plates 66 being electrically heated and being placed both near the inlet of the conveyor 65 and in its active side or in the reversal part of the belts 65a and 65b.

Next after the plates 66, but only but only in the active part of the metallic belts 65a and 65b, a pair of cooling members 72a and 72b are placed, on which the inside part of the belts 65a and 65b leans so it can slide. The cooling members 72a and 72b are connected with sources of a cooling fluid, not shown, to which the cooling of the parts just welded is due.

The lateral sides wrapped by the material 28 which has not yet been welded are held by the belts 65a and 65b, because of the adhesion, the belts 65a and 65b carrying the soap cake 4 towards the outlet of the conveyor 65. The heat transfered by the plates 66 to the material 28 welds it; soon after the welded parts are cooled because of the indirect contact with the cooling members 72a and 72b.

In connection with the outlet of the fourth conveyor 65, there is the inlet of a fifth carrier 73 which moves the wrapped soap cake away from the machine.

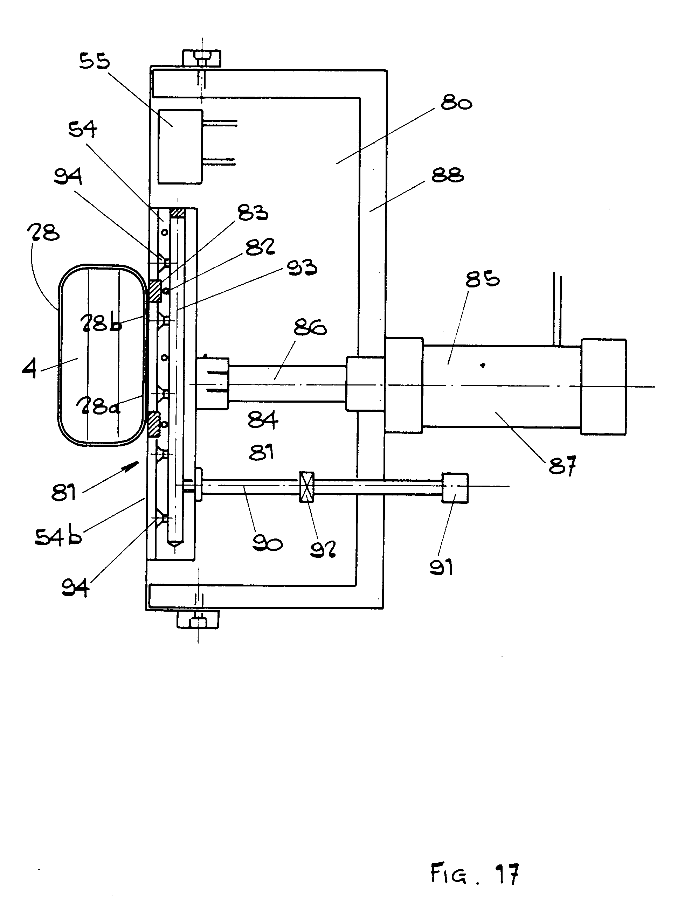

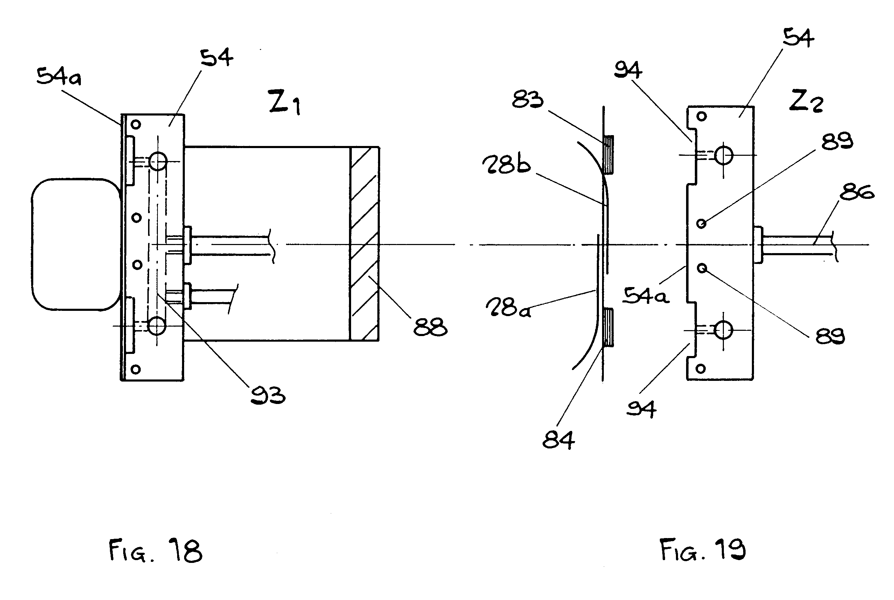

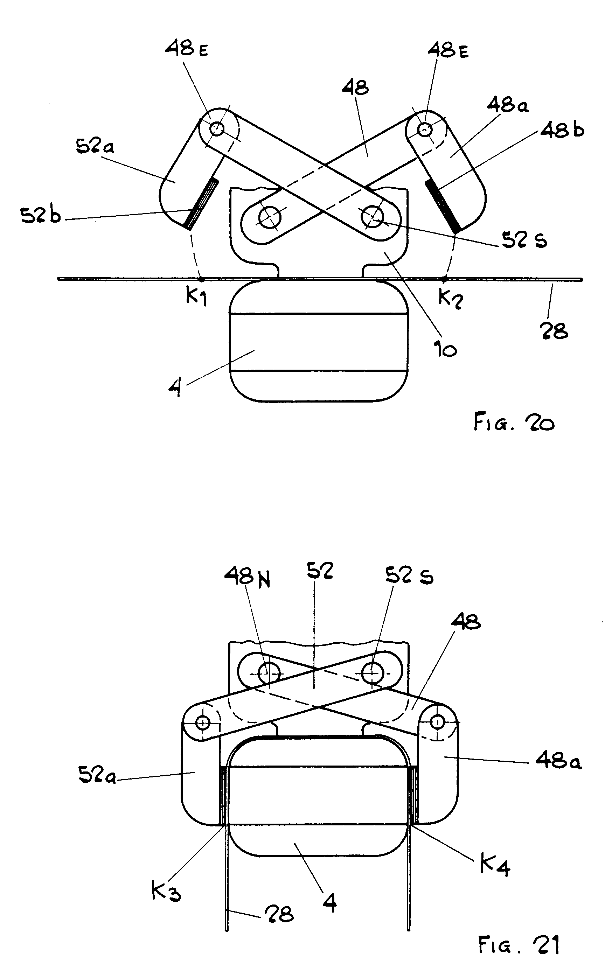

In Figs 17, 18 and 19 the welding bar 54 and the cooling bar 55 are shown in greater detail. Said bars are housed in a single housing 80 and their frontal surfaces turned towards the soap cake 4 constitute an exchanging heat surface 54b which operates on the edges 28a and 28b of the wrapping material 28 as stated above.

More precisely, Figs. 17, 18 and 19 show a safety device which cools the frontal surface 54b in a fraction of a second if the wheel 9 and 11 stop owing to a failure, in order to prevent the material 28 from being destroyed by overheating. On its frontal surface 55b the heating bar 54 has two notches 81 and 82 the purpose of which is to house thin metallic strips 83 and 84, respectively stretched between two supporting members, not shown, and having a very low heat capacity, so they can be heated in a very short time.

The safety device is housed in the housing 80 and is made up of a jack 85 pivoted on a rod 86 integral with the bar 54 and provided with a cylinder 87 integral with the wall 88 of the housing 80; the jack is also provided with a first control device connected to a central control unit of the machine, which are not shown because they are of a known type. The jack 85 moves the bar 54 from a first position Z₁ to a second position Z₂ and vice-versa. When the jack is into the first position Z₁, the surface 54b comes into contact with the folded edges 28a and 28b to weld them and the strips 83 and 84 are housed in the notches 81 and 82. In the second position Z₂ the surface 54b is removed from the edges 28a and 28b and the strips 83 and 84 are not in the notches 81 and 82.

The bar 54 has a large number of internal hollows 89 which house resistors connected to a current generator, not shown, to heat the body of the bar 54 and the strips 83 and 84 when the same are housed in the notches 81 and 82.

A hose-pipe 90 for compressed air is connected to an air compressor 91 and is provided with taps 92 operated by a second control device, not shown, to intercept or to send a flow of cold compressed air to a canalization 93 made in the body of the bar 54. The canalization 93 is connected to discharging orifices 94, the function of which is to spray cold air towards the strips 83 and 84.

If the machine is running regularly the jack 85 controlled by the first control device maintains the bar 54 in the first position Z₁ and the strips 83 and 84 are housed in the notches 81 and 82 to be heated by the resistors, which also heat the bar 54. However, if the machine stops, the jack 85 controlled by the first control device moves the bar 54 to the second position Z₂; simultaneously the taps 92 of the compressed air are opened by the second control device to send a flow of compressed air to the strips 83 and 84 which are still in contact with the edges 28a and 28b to prevent the same edges from being opened.

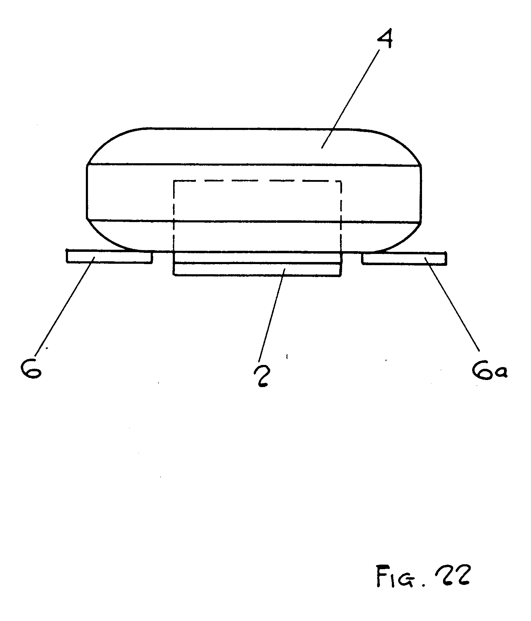

In Fig.20 are shown schematically the levers 45 and 52.
The pins 48N and 52S of the levers 42 and 52 are in opposition with respect to the arms 48a and 52a of the relevant levers; more particularly the pin 48N is in the part in which arm 52 is placed and the pin 52S is in the part in which arm 48a is placed. This placing of the pins 48N and 52S with respect to the arms 48a and 52a facilitates the use of the arms, the length of which causes the complete adhesion of the wrapping material 28 to the external surface of the soap cake 4 and prevents the same material 28 from being wrinkled while the levers 48 and 52 are moving from the release position to the seizing position.

This advantage offered by the structural configuration of the levers 48 and 52 will be better understood by refering to Figs. 20 and 21.

Refering to Fig.20, let us assume that the wrapping material 28 lies parallel to the supporting plane of the surface 10a on the surface of the soap cake 4 and that the arms 48a and 52a with interposed shimmings 48b and 52b, respectively, are in contact with the wrapping material 28 along segments represented by the points K₁ and K₂. When the ends of the shimmings 48b and 52b move from the position shown in Fig. 20 to the position shown in Fig. 21, the same shimmings 48 and 52 are brought into contact with the material 28 along segments represented by the points K₃ and K₄, the distance of which from the surface of the soap cake 4 is greater than the distance of the points K₁ and K₂ from the same surface.

During the movement of the levers 48 and 52 from the position of Fig. 20 to the position of Fig. 21, a sliding of the shimmings 48b and 52b with respect to the material 28 occurs. This keeps the material 28 on the surface of the soap cake 4 stretched to maintain the same material 28 adherent to said surface.

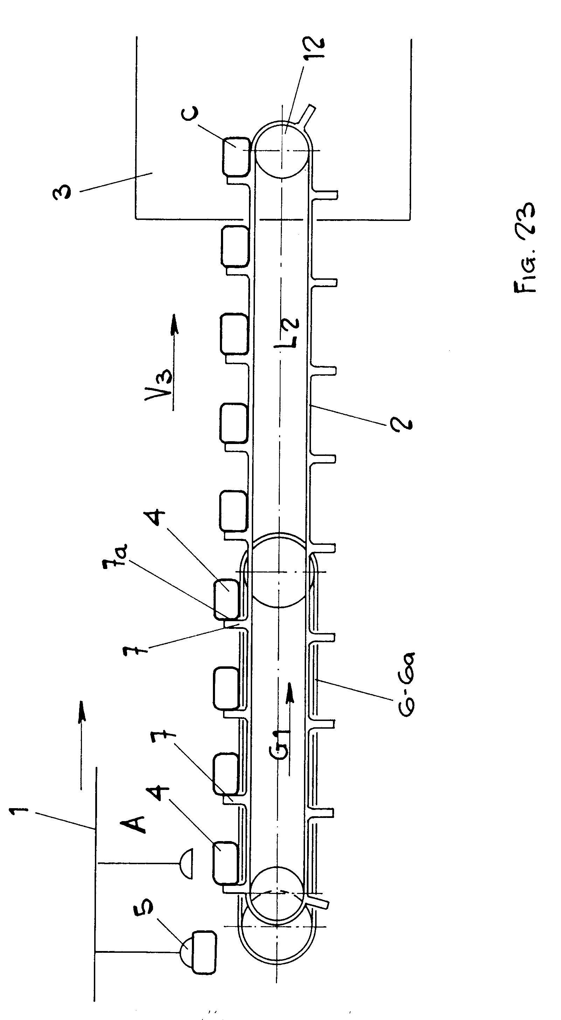

Figs. 22 and 23 illustrate a second embodiment of the first system of conveyors T₁. In this embodiment the system of conveyors T₁ comprises a central belt 2 and two lateral belts 6 and 6a. The central belt 2 has a transverse size smaller than the size of the soap cake 4 considered in the direction of the translation of the belt 2; further, the belt 2 lies in a plane which is slightly lower than the plane in which the lateral belts 6 and 6a lie, on the upper surface of which the soap cake 4 rests.
Belt 2 is longer than belts 6 and 6a and reaches the inlet station of the structures R₁ and R₂, as shown in Fig. 23.

Driving wheels, not shown, are kinematically connected to the belt 2 to move the same belt at a constant speed of translation V₃ which is slightly faster than V₁.

The belt 2 is provided with fiducial elements which are preferably small blocks of rubber or another material which is as soft as rubber to prevent the soap cakes from being damaged (Figs. 3 and 4). The fiducial elements 7 are shaped as protuberances of the belt 2 protruding perpendicularly to the lying plane of the same belt. The fiducial elements 7 are placed in sequence on the belt 2 at equal intervals, the distance between them being much greater than the longitudinal size of a soap cake 4 considered in the direction of the translation of the belt 2.

The kinematics of the belt 2, 6 and 6a and of the fiducial elements 7 allows the final correct positioning of the soap cake 4 on the system of conveyors T₁ even if the initial positioning of the same soap cake is not absolutely right; said soap cake 4 being released by a suction cup 5 on the conveyors T₁.

The right positioning of the soap cake 4 is defined by the walls 7a which develop in a direction perpendicular to the direction of the translation of the belt 2 and which come into contact with the soap cake 4 in a relevant part of the belts 6 and 6a because of the sliding of the belt with respect to the belts 6 and 6a.

Fig. 5 shows how the right positioning of the soap cakes 4 on conveyors T₁ is reached. At the beginning of the part L₁ of the belts 6 and 6a a suction cup 5 releases a soap cake 4 in a first position A; since the speed of translation of the belt 2 towards the machine 3, with the relevant fiducial elements 7, is slightly faster than the speed of translation of the belts 6 and 6a in the same direction, even if the soap cake 4 is not in the right position on the belt 2, it is in any case reached by one of said fiducial elements 7 of the belt 2. The fiducial element operates the soap cake 4 to bring its side 4b into contact with the wall 7a; this contact occurs in a second position B as shown in Fig.23. Since the fiducial elements 7 are timed with the kinematics of the machine 3, the soap cakes 4 which have reached the position B are also timed with the kinematics of the machine 3.

## Claims

1. A high speed automatic wrapping machine to handle delicate products with difficult shapes which are still in the hardening phase which comprises substantially:
a central control unit of the machine;
an inlet station (S_{E}) reached by a first conveyor (1) provided with a plurality of suction cups (5) to carry delicate products (4) from a plodder or from another system for feeding of said products to said inlet station (S_{E});
a first system of conveyors (T₁) for carrying said products (4) from the inlet station (S_{E}) to an inlet position (C) of the machine (3), the first system of conveyors (T₁) being provided with spacing members (7) which are placed in sequence at constant distances, the machine (3) being provided with belt conveyor means (42,43) for feeding sheets of a thermically weldable wrapping material (28) capable of wrapping said products (4);
characterized by the fact that it further comprises:
a first rotating upper structure (R₁) and a second rotating lower structure (R₂), the rotating structures (R₁,R₂) being capable of rotating in opposite directions of rotation to each other and being held up by a first supporting plate (3a), the rotating upper structure (R₁) comprising first mechanical elements (10,48,52) which translate from the inlet position (C) to a position in which a second system of conveyors and thermic welding devices (S_{T2}) begins, the second rotating lower structure (R₂) comprising second mechanical elements (8) which translate from the inlet position (C) to a position in which a first straight-line trajectory (A₁-A₂) ends, said first and second mechanical elements (8,10,48,52) moving along straight-line and circular trajectories (A₁-A₂,F₁-F₂,F₃-F₄,F₅-F₆,C₁-C₂); the mechanical elements (8,10,48,52) of both of the rotating structures (R₁,R₂) cooperating each other to transport the product (4) along a straight-line trajectory (A₁-A₂,F₁-F₂) and wrapping the product (4) on three sides (4a,4c,4d) by means of the wrapping material (28), the other sides of the product being wrapped whilst the products are being transported by the mechanical elements (10,48,52) of rotating upper structure (R₁);
primary bending members (P₁) for folding of the wrapping material (28) wrapped by the mechanical elements (8,10,48,52) on three sides (4a,4c,4d) of the products (4) and for placing of two superimposed edges (28a,28b) of the wrapping material (28) on a fourth side (4e) of the product (4);
primary thermic welding devices (S_{T1}) to weld the superimposed edges (28a,28b) folded by said primary bending members (P₁);
wrapping devices (A_{V}) for wrapping of the wrapping material (28) on the sides (4f,4g) of the product (4) in order to finish the wrapping of the product (4) by means of the wrapping material (28);
the second system of conveyors and thermic welding devices (S_{T2}) being capable of finishing the welding of the wrapping material (28) wrapped on the sides (4f,4g) and to carry the packed products (4) to an outlet station (S_{U}) of the machine.

2. A wrapping machine as in claim 1, characterized by the fact that said first system of conveyors (T₁) comprises a central belt (2) and two lateral belts (6,6a); at least one of said belts (2,6,6a) having a smooth supporting upper plane (2d) which lies at a height which is very close to that of the lower side of a product (4) when said product (4) is held by one of said suction cups (5); the belts (2,6,6a) being moved by means of operating devices at a constant speed of translation, which is very close to the speed of translation of the belt conveyor (1) both with regard to the intensity and direction; the supporting plane (2d) having a transverse size smaller than the size of the product (4) considered in the direction of the translation of the belts (2,6,6a) and lying in a plane which a little higher than the plane of the belt (2,6,6a) to which it belongs; the belts (2,6,6a) provided with the supporting plane (2d) being shorter than the other belts (2,6,6a) and not reaching the inlet position (C) of the machine (3).

3. A wrapping machine as in claim 2, characterized by the fact that the longest belts (2,6,6a) move at a speed of translation which is slightly higher than the speed of translation of the shortest belts (2,6,6a); in order to allow the products (4) to be correctly positioned in the spacing members (7); the longest belts (2,6,6a) are provided with fiducial elements (7) protruding perpendicularly to the lying plane of the longest of the belts (2,6,6a) which define housings (7b) for the products (4) delimited by the soft walls (7a) of the fiducial elements (7); the fiducial elements (7) operating on the product (4) which is laid on the belts (2,6,6a) to bring one side (4b) of said product (4) into contact with said wall (7a), the contact occuring in a position (B) which is between the inlet station (S_{E}) and the inlet position (C) of the machine (3); the fiducial elements (7) being timed with the mechanical elements (8,10,48,52) to allow the products (4) which have reached and crossed the position (B) to be timed with the mechanical elements (8,10,48,52) of the machine (3).

4. A wrapping machine as in claim 3, characterized by the fact that each one of the fiducial elements (7), which belongs to a longest belt (6), is perfectly aligned with a fiducial element of the other longest belt (6a) in a direction perpendicular to the direction of translation of the belts (2,6,6a).

5. A wrapping machine as in claim 1, characterized by the fact that the first upper rotating structure (R₁) is an upper wheel (11) comprising a first plurality of slides (30) which hold first carrying lever members (10) rotating with the upper wheel (11); the second rotating lower structure (R₂) is a lower wheel (9) comprising a second plurality of slides (15) which hold second supporting lever members (8) rotating with the lower wheel (9); the first carrying lever members (10) co-operating with the second supporting lever members (8) to move the products (4) from the inlet position (B) to the outlet station (S_{U}) of the machine (3); the first carrying lever members (10) being provided with pincer means (40,41) designed to draw a sheet of wrapping material (28) from the conveyor belt means (42,43) by seizing an edge (28a) of said wrapping material (28) while one of said lever members (10) is moving from a first angular position (P₁) to a second angular position (P₂), said conveyor belt means (42,43) being located between said positions (P₁,P₂); the pincer means (40,41) keeping the material (28) in touch with three sides (4a,4c,4d) of the product (4) and releasing the edge (28a) during the translation of the first carrying lever members (10) from the inlet position (C) to an ending position (D) located before said primary bending members (P₁), to wrap three sides (4a,4c,4d) of the product (4) by means of the wrapping material (28).

6. A wrapping machine as in claim 5, characterized by the fact that the first carrying lever members (10) present a plane surface (10a) turned towards the outside of the wheel (11), said plane surface (10a) resting without being pushed on the upper side (4c) of the product (4) wrapped by means of the wrapping material; the second supporting lever members (8) having a supporting plane surface (8b) on which the lower side of product (4) leans, said lower side being not yet welded by the material (28); first mechanical device (32,34,36,38) being provided for maintaining the first carrying lever members (10) parallel to itself, while said lever members (10) move along a first straight-line trajectory (F₁-F₂); first mechanical device (18,19,23,24) being provided for maintaining the second supporting lever members (8) parallel to itself, while said supporting lever members (8) move along a second straight-line trajectory (A₁-A₂), the second trajectory (A₁-A₂) lying parallel to the first trajectory (F₁-F₂); the trajectories (F₁-F₂,A₁-A₂) beginning at the inlet position (C) and ending in the ending position (D); the trajectories (F₁-F₂,A₁-A₂) being covered by said lever members (8,10) at a practically constant speed.

7. A wrapping machine as in claim 1, characterized by the fact that the first lever members (10) are integral with lever devices (48,52) provided with arms (48a,52a) for supporting of the product (4) and for wrapping of three sides (4a,4c,4d) of the product (4) by means of the wrapping material (28); the lever devices (48,52) having elastic means (48E) for maintaining of the arm (48a,52a) in contact with two sides of the product (4) for recovering of the dimensional differences due to the form tolerances of the products (4); the lever devices (48,52) being shaped to prevent said material (28) from being wrinkled; cam contours (45,50) made in the supporting plate (3a) being mechanically connected to said lever (48,52) to control the movements of said lever devices (48,52).

8. A wrapping machine as in claim 1, characterized by the fact that the primary bending members (P₁) for folding of an edge (28a) of the wrapping material (28) on a fourth side of the product (4) comprise a folding lever (53) journaled on a pin (53a) supported by the supporting plate (3a); said folding lever (53) being placed near a first circular trajectory (C₁) crossed by the first carrying lever members (10) and radiused to the first straight-line trajectory (F₁-F₂); an operating mechanism moving the folding lever (53) from a first position (X₁) to a second position (X₂) and vice-versa; the folding lever (53) having a curved end (53b) which brings the edge (28b) of the wrapping material (28) into contact with a side (4b) of the soap cake (4).

9. A wrapping machine as in claim 1, characterized by the fact that primary thermic welding devices (S_{T1}) lie parallel to a third straight-line trajectory (F₃-F₄) crossed by the first carrying lever members (10) and radiused to the first circular trajectory (C₁); said primary thermic welding devices (S_{T1}) being provided with a movable safety device which sends a flow of cold compressed air to a heating surface (54b) when the machine is stopped (3); said primary thermic welding devices (S_{T1}) are also provided with a sharp edge (54a) which folds the edge (28a) of the wrapping material (28) on the fourth side of the product (4) and brings the edge (28a) into contact with an edge (28b) folded by the folding lever (53); a cooling bar (55) cools the edge (28b) welded to the edge (28a) by means of the heating surface (54b), said cooling bar (55) being located after the heating surface (54b) and lying parallel to the third straight-line trajectory (F₃-F₄); after the work of said primary thermic welding devices (S_{T1}) and of said bar (55) the material (28) being shaped as a tubular structure (4t), the lateral ends of which are still open.

10. A wrapping machine as in claim 1, characterized by the fact that said wrapping devices (A_{V}) comprise two oscillating folding levers (56) journaled on a shaft (56a) which develops in a direction perpendicular to the direction of a fourth straight-line trajectory (F₅-F₆) crossed by the first carrying lever members (10) and radiused to a second circular trajectory (C₂); the shaft (56a) being connected to a kinematic mechanism which moves the ends of the folding levers (56) simultaneously from a first position (Y₁) to a second position (Y₂) and viceversa; pushers (56c) placed at the ends (56b) of the folding levers (56) operating two parts of the wrapping material (28) which are still open to fold them towards the inside of the tubular structure (4t), this action occuring while the folding levers reach the second position; near the upper wheel (11) and more precisely in a portion of the a fourth straight-line trajectory (F₅-F₆) two primary sharp stationary folding edges (57) being placed, each one of which is provided with a sharp edge capable of folding a part of the wrapping material (28) opposite those folded by the pushers (56c) while the product (4) carried by a member (10) is in contact with said sharp edge; two secondary sharp stationary folding edges being provided to finish the wrapping of the product (4).

11. A wrapping machine as in claim 1, characterized by the fact that the second system of conveyors and thermic welding devices (S_{T2}) consists of a third and a fourth carrier (60,65); the third carrier (60) comprising two lateral belts (60a,60b) shut on driving wheels (62a,63a,62b,63b); two plates (64a,64b) operating the active sides of the lateral belts (60a,60b), respectively, which plates (64a,64b) extend longitudinally along a substantial length of the belts (60a,60b); said plates (64a,64b) being stressed to lean against the respective belts (60a,60b) by elastic devices (64c,64d,64e,64f) to increase the adhesion between the surfaces of the belts (60a,60b) to which two lateral sides of the product (4) are engaged and the same sides; the third carrier (60) being provided with an inlet next to the cam contour (45) causes said lever (48) to move in a release position in order to allow the translation of the product (4) from the the carrying lever member (10) to the carrier (60); said cam contour (50) maintaining the contact between the arm (52a) of the lever (52) and the side of the product (4) to compel the product (4) to translate towards the inlet of the third carrier (60); said third carrier (60) being also provided with an outlet which lies near the inlet of the fourth carrier (65); said fourth carrier (65) consisting of two very thin lateral elastic belts (65a,65b), which are good heat conductors and which are closed, respectively, between two pairs of driving wheels (67,68,67a,68a); heating plates (66) being placed near the inlet of said carrier (65) and in its active side and in the reversal part of the belts (65a,65b): the heating plates (66) being capable of making the belts (65a,65b) move which slide on said plates (66) and of supplying the heat to weld the part of the material (28), which has not yet been welded, successively to said plates (66), but only in the active parts of said metallic belts (65a,65b), a pair of cooling members (72a,72b) being placed, on which the inside part of the belts (65a,65b) leans so as to slide; the fourth carrier (65) being provided with an outlet which lies near the inlet of a fifth carrier (73), which moves the wrapped products (4) away from the machine.

12. A wrapping machine as in claim 1, characterized by the fact that the upper wheel (11) comprises a first plurality of radial guides (31); a first slide (30) being housed slidably in each one of said radial guides (31), said slide (30) being integral with a first end of a shaft (35), the second end of which holds a bearing (34) inserted in a first grooved contour (32), said first contour (32) developing in a second plate (33) integral with the supporting plate (3a); the first grooved contour (32) being closed on itself and co-operating with the bearing (34) to define the radial movements of the slide (30); the configuration of the grooved contour (32) defining the straight-line trajectories (F₁-F₂,F₃-F₄,F₅-F₆) and the circular radiusing trajectories (C₁,C₂) covered by the slide (30), an end of which lies in the external part of the upper wheel (11); the lower wheel (9) comprising a second plurality of radial guides (16); a second slide (15) being slidably housed in each one of said radial guides (16), said slide (15) being integral with a first end of a shaft (17), the second end of which holds a bearing (18) in a second grooved contour (19); said second contour (19) developing in a third plate (20) integral with the supporting plate (3a); said second contour (19) being closed on itself and co-operating with the bearing (18) to define the radial movements of the slide (15), the configuration of the second grooved contour (19) defining the straight-line trajectories (A₁-A₂,A₂-A₁) covered by the slide (15), an end of which lies in the external part of the lower wheel (9).

13. A wrapping machine as in claim 12, characterized by the fact that the end of the first slide (30), which lies in the external part of the upper wheel (11), supports a first pin (29) to journal said first external end to one end of said first carrying lever member (10); the carrying lever member (10) being provided with a first arm delimited by a plane surface (10a) and with a second arm which is integral with a first end of a first shaft (37), the second end of which holds a first bearing (36), said first bearing (36) being inserted in third grooved contour (38) which develops in the plate (33); the third contour (38) being closed on itself and co-operating with the first bearing (36) to maintain the plane surface (10a) of said lever member (10) parallel to itself while said first external end of the slide (30) is moving along the straight-line trajectories (F₁-F₂,F₃-F₄,F₅-F₆); the end of the second slide (15) which lies in the external part of the lower wheel (9) supporting a second pin (26) to journal said second external end to the supporting lever member (8); the supporting lever member (8) being provided with a first arm delimited by a plane surface (8a) and with a second arm integral with an end of a second shaft (22), the second end of which supports a second bearing (23), said second bearing (23) being inserted in a fourth grooved contour (24); the fourth grooved contour (24) being closed on itself and co-operating with the second bearing (23) to maintain the plane surface (8a) parallel to itself while said second external end of the slide (15) is moving along the trajectories (A₁-A₂,A₂-A₁).

14. A wrapping machine as in claim 12, characterized by the fact that the first lever device (48) has a second arm (46), the second end of which supports a pin for a roller (47) which comes into contact with a fifth cam contour (45) which develops along the peripheral contour of the plate (33) and which is closed on itself; the roller (47) being mechanically constrained to move along said contour (45) which is so shaped to co₋operate with the roller (47) in order that when said first carrying lever member (10) is in the position (C) the arm (48a) is removed from the product (4) and when said member (10) is in said position (D) said arm (48a) seizes the product (4), the seizing position of the arm (48a) being maintained until said member (10) reaches said second system of conveyors and thermic welding devices (S_{T2}); the second lever device (52) comprising a second lever arm (51) the end of which holds a pin for a roller (49) which is inserted in a sixth grooved contour (50); the sixth grooved contour (50) developing in the plate (33) and being closed on itself; the roller (49) being mechanically constrained to move along the contour (50) which is so shaped to co-operate with the roller (49) in order that when said member (10) is in said position (C) the arm (52a) is removed from said product (4) and when the member (10) is in the position (D) the arm (52a) seizes the product (4) wrapped by the material (28) so as to insert the product (4) in said second system of conveyors and thermic welding devices (S_{T2}).

15. A wrapping machine as in claim 12, characterized by the fact that at least one of said lever devices (48,52) is provided with a pin (48E); said pin (48E) having an elastic articulation and being located between said arm (48a,52a) and a pin (52S,48N).

16. A wrapping machine as in claim 12, characterized by the fact that the pins (48N,52S) of the lever devices (48,52) are in opposition with respect to the arms (48a,52a) of the relevant levers (48,52); the pin (48N) being located in the part in which the arm (52a) is placed and the pin (52S) being located in the part in which the arm (48a) is placed.

17. A wrapping machine as in claim 1, characterized by the fact that the number of said first radial guides (31) is the same as the number of said second radial guides (16), the radial sizes of the upper wheel (11) being identical with the radial sizes of the lower wheel (9).

18. A wrapping machine as in claim 1, characterized by the fact that the safety device of the primary thermic welding devices comprises a jack (85) provided with a rod (86) integral with a heating bar (54) and with a plunger (87) integral with a wall (88) of a housing (80); the jack (85) being provided with a first control device connected to the central control unit of the machine; said jack (85) moving said bar (54) from a first position (Z₁) to a second position (Z₂) and vice-versa; when the jack (85) is in the first position (Z₁), the surface (54a) contacts the folded edges (28a,28b) to weld said edges (28a,28b); when the jack (85) is in the second position (Z₂), the surface (54a) is removed from said edges (28a,28b).

19. A wrapping machine as in claim 18, characterized by the fact that a frontal surface (54b) of the heating bar (54) has notches (81,82) which house, respectively, thin metallic strips (83,84) stretched between two supporting members and having a very low heat capacity enabling them to be heated or cooled in a very short time; the function of the metallic strips (83,84) being to support the product (4) when the bar (54) is lying in the second position (Z₂); the bar (54) comprising a plurality of canalizations (93) made in the body of the bar (54), the inlets of which are connected to a hose-pipe (90) for compressed air, the outlets of the canalizations (93) being connected to discharging orifices (94), the function of which is to spray cold air to the strips; the hose-pipe being also connected to an air compressor (91) and being provided with taps (92) operated by a second control device to send or to intercept a flow of cold compressed air to the strips (83,84); the air being intercepted when the bar (54) is lying in said first position (Z₁) and the sending being actuated when said bar (54) is in said second position (Z₂).

## Patentansprüche

1. Hochgeschwindigkeits-Einwickelmaschine für empfindliche Produkte mit komplizierter Form, welche noch in der Aushärtungsphase sind, wobei die Einwickelmaschine folgende Glieder umfaßt:
eine Zentralkontrolleinheit;
eine Eingangsstelle (S_{E}), die sich im Lauf eines ersten Förderbands (1) befindet, welches mit mehreren Ansaugnäpfen (5) zur Beförderung von empfindlichen Produkten (4) von einer Seifenbildungsmaschine oder einem anderem Beförderungssystem von denselben Produkten (4) bis zu der Eingangsstelle (S_{E}) ausgestattet ist;
eine erstes System von Förderbändern (T₁) zur Beförderung der Produkte (4) von der Eingangsstelle (T₁) bis zu einem Eingang (C) der Einwickelmaschine (3), wobei das erste System von Förderbändern (T₁) mit Einordnern (7) ausgestattet ist, die sich auf den Förderbändern (T₁) hintereinander in festen Abständen befinden, wobei die Maschine (3) mit Förderbändern (42,43) zu ihrer Speisung mit verschweißbarem Einpackstoffbogen (28) ausgestattet ist, die die Produkte (4) einwickeln;
dadurch gekennzeichnet, daß außerdem die Maschine folgende Einrichtungen aufweist:
eine erste drehende Oberstruktur (R₁) und eine zweite drehende Unterstruktur (R₂), wobei sich die drehenden Strukturen (R₁,R₂) in entgegensetzten Drehrichtungen drehen und durch eine Stützwand (3a) gestützt werden; die erste drehende Oberstruktur (R₁) weist erste mechanische Glieder (10,48,52) auf, die sich vom Eingang (C) bis zu einer Anfangstelle von einem zweiten System von Förderern und thermisch verschweißenden Vorrichtungen (S_{T2}) bewegen, wobei die zweite drehende Unterstruktur (R₂) zwei mechanische Glieder (8) umfaßt, die sich vom Eingang (C) bis zu der Endstelle von einer ersten geraden Bahn bewegen; die ersten und zweiten mechanischen Glieder (8,10,48,52) bewegen sich an geraden und kreisförmigen Bahnen (A₁-A₂,F₁-F₂,F₃-F₄,F₅-F₆,C1,C2) entlang; die mechanischen Glieder (8,10,48,52) der beiden drehenden Strukturen (R₁,R₂) dienen zur Beförderung der Produkte (4) an einer geraden Bahn entlang und zum Einwickeln von drei Seiten (4a,4c,4d) derselben Produkte (4) mit dem Einpackstoffbogen (28), wobei die übrigen Seiten des Produkts (4) im Laufe dessen Beförderung durch die mechanischen Glieder (10,48,52) der ersten drehenden Oberstruktur (R₁) eingewickelt werden;
erste Faltungsvorrichtungen (P₁) zur Faltung des Einpackstoffbogens (28), der durch die mechanischen Glieder (8,10,48,52) auf drei Seiten (4a,4c,4d) des Produkts (4) gefaltet worden sind, und zur Anordnung von zwei übereinanderliegenden Rändern (28a,28b) des Einpackstoffbogens (28) auf einer vierten Seite des Produkts (4);
erste thermische Schweißungseinrichtungen (S_{T1}) zur Schweißung der übereinanderliegenden Ränder (28a,28b), die durch die erste Faltungsvorrichtungen (P₁) gefaltet worden sind;
Einwicklungsvorrichtungen (A_{V}) zur Einwicklung des Einpackstoffbogens (28) auf den Seiten (4f,4g) des Produkts (4), damit die Packung vervollständigt wird;
und dabei vervollständigt das zweite System von Förderern und schweißenden Vorrichtungen (S_{T2}) die Schweißung des Einpackstoffbogens (28), der auf den Seiten (4f,4g) eingewickelt ist und trägt das eingewickelte Produkt (4) bis zu dem Ausgang (S_{U}) der Maschine.

2. Einwickelmaschine nach Anspruch 1, dadurch gekennzeichnet, daß das erste System von Förderbändern (T₁) aus einem Zentralband (2) und zwei Seitenbändern (6,6a) besteht; wobei mindest ein der Bänder (2,6,6a) eine weiche obere Stützfläche (2d) aufweist, die sich an einer Höhe befindet, die der Höhe der Unterseite eines Produkts (4) kaum gleich wenn das Produkt (4) durch einen der Ansaugnäpfe (5) getragen wird; wobei die Bänder (2,6,6a) durch Antriebsgeräte in fester Translationsgeschwindigkeit geschoben werden, deren Wert und Richtung dem Wert und der Richtung der Translationsgeschwindigkeit des ersten Förderbands (1) kaum gleich sind; die obere Stützfläche (2d) weist eine Querabmessung auf, die geringer als der Abmessung des Produkts (4) in der Translationsrichtung der Bänder (2,6,6a) ist, wobei die obere Stützfläche (2d) auf einer Ebene liegt, die kaum hocher als die Ebene der Bänder (2,6,6a) ist, dem die obere Stützfläche (2d) gehört; die mit der obere Stützfläche (2d) ausgestatteten Bänder (2,6,6a) sind kürzer als die anderen Bänder, deshalb reichen sie nicht in dem Eingang (C) der Maschine (3).

3. Einwickelmaschine nach Anspruch 2, dadurch gekennzeichnet, daß sich die längeren Bänder (2,6,6a) mit einer Translationsgeschwindigkeit bewegen, die ein wenig schneller als die Translationsgeschwindigkeit der kürzeren Bänder (2,6,6a) ist, damit die Produkte (4) in den Einordnern (7) genau angeordnet werden; die längsten Bänder (2,6,6a) sind mit Flüchtungsmitteln (7) ausgestattet, die sich senkrecht zur Ebene vorstreckt, auf welcher das längste der Bänder (2,6,6a) liegt; wobei die Flüchtungsmittel (7) Räume (7b) für die Produkte (4) bilden, die durch die weichen Wände (7a) der Flüchtungsmittel (7) begrenzt werden; die Flüchtungsmittel (7) bewirken eine relative Verschiebung des Produkts (4), das auf den Bändern (2,6,6a) liegt, um eine Seite (4b) des Produkts (4) in Berührung mit der Wand (7a) zu tragen, wobei die Berührung an einer Stelle (B) stattfindet die sich zwischen der Eingangsstelle (SE) und dem Eingang (C) der Maschine (3) befindet; die Bewegungen der Flüchtungsmittel (7) sind mit der Bewegungen der mechanischen Glieder (8,10,48,52) synchronisiert, damit nach der Stelle (B) die Produkte (4) mit den Bewegungen der mechanischen Glieder (8,10,48,52) der Maschine (3) synchronisiert sind.

4. Einwickelmaschine nach Anspruch 3, dadurch gekennzeichnet, daß jedes der Flüchtungsmittel (7), das einem der längeren Bänder (6) gehört, genau mit einem Flüchtungsmittel des anderen längeren Bands (6a) in einer Richtung angereiht ist, die zur Translationsrichtung der Bänder (2,6,6a) senkrecht ist.

5. Einwickelmaschine nach Anspruch 1, dadurch gekennzeichnet, daß die erste drehende Oberstruktur (R₁) aus einem Oberkarussel (11) besteht, das mehrere Führungsbahnen (30) für erste Beförderungshebelglieder (10) umfaßt, die sich zusammen mit dem drehenden Oberkarussel (11) drehen; die zweite drehende Unterstruktur (R₂) besteht aus einem Unterkarussel (9), das mehrere Führungsbahnen (15) für zweite Stützhebelglieder (8) umfaßt, die sich zusammen mit dem Unterkarussel (9) drehen; wobei die ersten Beförderungshebelglieder (10) zusammen mit den zweiten Stützhebelgliedern (8) die Produkte (4) vom Eingang (B) bis zu einer Ausgangsstelle (S_{U}) der Maschine (3) tragen; die ersten Beförderungshebelglieder (10) sind mit Zangen (40,41) ausgestattet, die Einpackstoffbögen (28) von den Förderbändern (42,43) durch Ergreifen eines Rands des Einpackstoffbogens (28) bei der Bewegung eines der Beförderungshebelglieder (10) von einer ersten Winkelstelle (P₁) bis zu einer zweiten Winkelstelle (P₂) forttragen, wobei die Förderbänder (42,43) zwischen den Winkelstellen (P₁,P₂) angeordnet sind; die Zangen (40,41) tragen den Einpackstoffbogen (28) in Berührung mit drei Seiten (4a,4c,4d) des Produkts (4) und lassen die Ränder (28a) bei den Translationsbewegungen des ersten Beförderungshebelglieds (10) vom Eingang (C) bis zu einer Endstelle (D) frei, die vor den ersten Faltungsvorrichtungen (P₁) vorgesehen ist, damit drei Seiten (4a,4c,4d) des Produkts (4) durch einen Einpackstoffbogen (28) eingewickelt werden.

6. Einwickelmaschine nach Anspruch 5, dadurch gekennzeichnet, daß die ersten Beförderungshebelglieder (10) eine Fläche (10a) aufweisen, die auf die Außenseite des Oberkarussels (11) gerichtet ist, wobei sich die Fläche (10a) auf die Oberseite (4c) des eingewickelten Produkts (4) liegt, ohne damit zu stoßen; das zweite Stützhebelglied (8) weist eine Stützfläche (8b) auf, auf welcher die Unterseite des Produkts (4) liegt, wenn die Unterseite noch nicht eingewickelt ist; erste mechanische Vorrichtungen (32,34,36,38) sind vorgesehen, um das Beförderungshebelglied (10) bei seiner Bewegung an der ersten geraden Bahn (F₁-F₂) entlang zu demselben parallel zu halten; wobei zweite mechanische Einrichtungen (18,19,23,24) vorgesehen sind, um das zweite Stützhebelglied (8) bei seiner Bewegung an einer zweiten geraden Bahn (A₁-A₂) entlang zu demselben parallel zu halten, wobei die zweite Bahn (A₁-A₂) zur ersten Bahn (F₁-F₂) parallel liegt; der Anfang der Bahn (F₁-F₂,A₁-A₂) befindet sich bei dem Eingang (C) und das Ende in der Endstelle (D); die Glieder (8,10) bewegen sich an den Bahnen (F₁-F₂,A₁-A₂) entlang in wesentlichem mit fester Geschwindigkeit.

7. Einwickelmaschine nach Anspruch 1, dadurch gekennzeichnet, daß die ersten Beförderungshebelglieder (10) an Hebelvorrichtungen (48,52) befestigt sind, die mit Armen (48a,52a) zur Stützung des Produkts (4) und zum Einwickeln von drei Seiten (4a,4c,4d) desselben Produkts (4) durch einen Einpackstoffbogen (28); wobei die Hebelvorrichtungen (48,52) mit elastischen Mitteln (48_{E}) zum Halten des Arms (48a,52a) in Berührung mit zwei Seiten des Produkts (4) ausgestattet sind, damit die Formtoleranze des Produkts (4) rückgewonnen werden; die Hebelvorrichtungen (48,52) sind so geformt, daß sie die Einpackstoffbögen (28) nicht runzeln; Nockenkonturen (45,50), die in der Stützwand (3a) ausgeführt sind, sind mit den Hebelvorrichtungen (48,52) zur Kontrolle der Bewegungen derselben Hebelvorrichtungen (48,52) mechanisch verbunden.

8. Einwickelmaschine nach Anspruch 1, dadurch gekennzeichnet, daß die ersten Faltungsvorrichtungen (P₁) zur Faltung eines Rands (28a) des Einpackstoffbogens (28) auf einer dritten Seite des Produkts (4) einen Faltungshebel (53) umfaßen, die sich um einen durch die Stützwand (3a) gestützten Zapfen (53a) drehen; der Faltungshebel (53) befindet sich an der ersten kreisförmigen Bahn (C₁) der Beförderungshebelglieder (10) entlang, die mit der geraden Bahn (F₁-F₂) verbunden ist; eine Antriebsvorrichtung stößt den Faltungshebel (53) von einer ersten Stelle (X₁) bis zu einer zweiten Stelle (X2) und umgekehrt; der Faltungshebel (53) weist ein gekrümmtes Ende (53b) auf, das den Rand (28b) des Einpackstoffbogens (28) in Berührung mit einer Seite (4b) des Produkts (4) bringt.

9. Einwickelmaschine nach Anspruch 1, dadurch gekennzeichnet, daß die ersten thermischen Schweißungseinrichtungen (S_{T1}) parallel zu einer vierten geraden Bahn (F₃-F₄) der Beförderungshebelglieder (10) liegen, die mit der ersten kreisförmigen Bahn (C₁) verbunden ist; die ersten thermischen Schweißungseinrichtungen (S_{T1}) sind mit einer beweglichen Sicherheitsvorrichtung ausgestattet, welche eine Kaltdruckluftströmung auf eine Heizungswand (54b) beim Anhalten der Maschine (3) bläst; außerdem weisen die ersten thermischen Schweißungseinrichtungen (S_{T1}) einen spitzförmigen Rand (54a) auf, welche den Rand (28a) des Einpackstoffbogens (28) auf der vierten Seite des Produkts (4) faltet und den Rand (28a) in Berührung mit dem Rand (28b) bringt, der durch den Faltungshebel (53) gefaltet worden ist; eine Kühlungsstange (55) kühlt den mit dem Rand (28a) gefalteten Rand (28b) durch eine Kühlungsfläche (54b) ab, wobei die Kühlungsstange (55) hinter der Heizungswand (54b) kommt und zur dritten Bahn (F₃-F₄) parallel ist; nachdem der Einpackstoffbogen (28) durch die ersten thermischen Schweißungseinrichtungen (S_{T1}) und die Kühlungsstange (55) bearbeitet worden ist, weist er eine rohrförmige Form (4t) auf, deren Seitenenden noch geöffnet sind.

10. Einwickelmaschine nach Anspruch 1, dadurch gekennzeichnet, daß die Einwicklungsvorrichtungen (A_{V}) zwei schwingende Faltungshebel (56) aufweisen, die sich um eine Welle (56a) drehen, wobei sich die Welle (56a) senkrecht zur dritten Bahn (F₅-F₆) der Beförderungshebelglieder (10) erstreckt, wobei die dritte Bahn (F₅-F₆) mit einer zweiten kreisförmigen Bahn (C₂) verbunden ist; die Welle (56a) ist mit einer Betätigungsvorrichtung verbunden, die die beiden Faltungshebel (56) von einer ersten Stelle (Y₁) bis zu einer zweiten Stelle (Y₂) bewegt und umgekehrt; Stösselmittel (56c), die an den Enden der Faltungshebel (56) vorgesehen sind, falten zwei noch geöffnete Seite des Einpackstoffbogens (28) nach der Innenseite der rohrförmigen Struktur (4t), während sich die Faltungshebel (56) in der zweiten Stelle (Y₂) befinden; in der Nähe des Oberkarussels (11) und genauer an einer Seite der vierten geraden Bahn (F₅-F₆) sind zwei erste spitzförmige stationäre Faltungsränder (57) angeordnet, je mit einem spitzförmigen Rand ausgestattet, der eine Seite des Einpackstoffbogens (28) faltet, und diese liegt der durch die Stösselmittel (56c) gefalteten Seite gegenüber; das durch ein Beförderungshebelglied (10) getragene Produkt (4) kommt hingegen in Berührung mit dem spitzförmigen Rand; zwei weitere spitzförmige stationäre Faltungsränder sind vorgesehen, die die Faltung des Produkts (4) vervollständingen.

11. Einwickelmaschine nach Anspruch 1, dadurch gekennzeichnet, daß das zweite System von Förderern und thermisch verschweißenden Vorrichtungen (ST2) einen zweiten und einen dritten Förderer (60,65) umfaßt; wobei der dritte Förderer (60) zwei Seitenbänder (60a,60b) aufweist, die durch Betätigungsräder (62a,63a,62b,63b) betrieben werden; zwei Betätigungsplatten (64a,64b) treiben die Beförderungsseiten der Seitenbänder (60a,60b); die Betätingungsplatten (64a,64b) liegen in wesentlichem an der Länge der Seitenbänder (60a,60b) entlang; jede der Betätingungsplatten (64a,64b) werden durch elastische Vorrichtungen (64c,64d,64e,64f) auf die eigene Seitenbänder (60a,60b) gedrückt, damit die Adhäsion zwischen den Flächen der Seitenbänder (60a,60b), die die Seiten des Produkts (4) tragen, und denselben Seiten versteigert wird; der dritte Förderer (60) weist einen Eingang auf, der sich in der Nähe der ersten Nockenkontur (45) befindet, durch welche die Hebelvorrichtung (48) bis zu einer Freilassungsstelle bewegt wird, damit das Produkt (4) vom ersten Beförderungshebelglied (10) bis zu dem Förderer (60) geschoben wird; die zweite Nockenkontur (50) hält den Arm (52a) der Hebelvorrichtung (52) in Berührung an der Seite des Produkts (49), damit das Produkt (4) zum Eingang des dritten Förderers (60) geschoben wird; außerdem ist der dritte Förderer (60) mit einem Ausgang ausgestattet, der sich in der Nähe des Eingangs des vierten Förderers (65) befindet; der vierte Förderer (65) besteht aus zwei sehr dünnen warmleitenden elastischen Seitenbändern (65a,65b), je durch ein Paar Betätigungsräder (67,68,67a,68a) betrieben; Heizungsplatten (66) sind in der Nähe des Eingangs des vierten Förderers (65) und in den Beförderungs-und Rückseiten der Seitenbänder (65a,65b) vorgesehen: die Heizungsplatten (66) lassen die Seitenbänder (65a,65b) auf ihrer Fläche gleiten, um die noch nicht geschweißten Seiten des Einpackstoffbogens (28) zu schweißen; hinter den Heizungsplatten (66) und genauer in den Beförderungsseiten der Metallbänder (65a,65b) sind zwei Kühlungsglieder (72a,72b) angeordnet, auf welchen die Innenseiten der Metallbänder (65a,65b) gleiten; außerdem weist der vierte Förderer (65) einen Ausgang auf, der sich in der Nähe des Eingangs eines fünften Förderers (73) befindet, der zur Entfernung der gefalteten Produkte aus der Maschine dient.

12. Einwickelmaschine nach Anspruch 1, dadurch gekennzeichnet, daß das Oberkarussel (11) mehrere erste Radialführungsbahnen (31) umfaßt; ein erster Radialschlitten (30) gleitet innerhalb jeder der ersten Radialführungsbahnen (31) und ist mit einem ersten Ende einer Welle (35) fest verbunden, an deren zweitem Ende ein Lager (34) gelagert ist, das sich in einer ersten gerillten Kontur (32) bewegt, wobei die erste Kontur (32) in einer an der Stützwand (3a) befestigten Platte (33) ausgeführt ist; die geschlossene erste Kontur (32) sorgt zusammen mit dem Lager (34) dafür, daß die genauen Radialbewegungen des Radialschlittens (30) begrenzt werden; die Form der gerillten ersten Kontur (32) wird so gewählt, daß sie die geraden (F₁-F₂,F₃-F₄,F₅-F₆) und die kreisförmigen (C₁,C₂) Bahnen des Radialschlittens (30) beschränken; ein Ende des Radialschlittens (30) befindet sich in der Außenseite des Oberkarussels (11); das Unterkarussel (9) umfaßt mehrere zweite Radialführungsbahnen (16); ein zweiter Radialschlitten (15) gleitet innerhalb jeder der zweiten Radialführungsbahnen (16) und ist mit einem ersten Ende einer Welle (17) fest verbunden, an deren zweitem Ende ein Lager (18) gelagert ist, das sich in einer zweiten gerillten Kontur (19) bewegt, wobei die zweite Kontur (19) in einer an der Stützwand (3a) befestigten Platte (20) ausgeführt ist; die geschlossene zweite Kontur (19) sorgt zusammen mit dem Lager (18) dafür, daß die genauen Radialbewegungen des Radialschlittens (15) begrenzt werden, die Form der gerillten zweiten Kontur (19) wird so gewählt, daß sie die geraden Bahnen (A₁-A₂,A₂-A₁) des Radialschlittens (15) beschränken; ein Ende des Radialschlittens (30) befindet sich in der Außenseite des Unterkarussels (9).

13. Einwickelmaschine nach Anspruch 12, dadurch gekennzeichnet, daß das Ende des ersten Radialschlittens (30), das sich in der Außenseite des Oberkarussels (11) befindet, einen ersten Zapfen (29) zur Bolzenverbindung des Außenendes mit einem Ende eines Beförderungshebelglieds (10) trägt; das Beförderungshebelglied (10) ist mit einem ersten Arm ausgestattet, der durch die Fläche (10a) begrenzt wird und weist einen zweiten Arm auf, der an einem Ende einer ersten Welle (37) befestigt ist, wobei das zweite Ende der Welle (37) ein erstes Lager (36) trägt, das sich innerhalb einer in der Platte (33) ausgeführten gerillten dritten Kontur (38) bewegen kann; die geschlossene dritte Kontur (38) dient zusammen mit dem ersten Lager (36) dazu, die Fläche (10a) des Beförderungshebelglieds (10) zu demselben parallel zu halten, währenddessen sich das erste Außenende des Radialschlittens (30) an den geraden Bahnen (F₁-F₂,F₃-F₄,F₅-F₆) entlang bewegt; das Ende des zweiten Radialschlittens (15), das sich in der Außenseite des Unterkarussels (9) befindet, trägt einen zweite Zapfen (26) zur Bolzenverbindung des zweites Außenendes mit einem Ende des Stützhebelglieds (8); das Stützhebelglied (8) ist mit einem durch eine Stützfläche (8a) begrenzten Arm ausgestattet und weist einen zweite Arm auf, der an einem Ende einer zweiten Welle (22) befestigt ist, wobei das zweite Ende der Welle (22) ein zweites Lager (23) trägt, das sich innerhalb einer in der Platte (33) ausgeführten gerillten vierten Kontur (24) bewegen kann; die geschlossene vierte Kontur (24) dient zusammen mit dem zweiten Lager (23) dazu, die Stützfläche (8a) des Stützhebelglieds (8) zu demselben parallel zu halten, währenddessen sich das zweite Außenende des Radialschlittens (15) an den geraden Bahnen (A₁-A₂,A₂-A₁) entlang bewegt.

14. Einwickelmaschine nach Anspruch 12, dadurch gekennzeichnet, daß die erste Hebelvorrichtung (48) einen zweiten Arm (46) aufweist, dessen zweites Ende einen Zapfen für eine Rolle (47) trägt, die in Berührung an eine fünfte geschlossene Nockenkontur (45) kommt, die sich an der Außenkontur der Platte (33) entlang erstreckt, wobei die Rolle (47) derartig gebunden ist, daß sie sich an der Nockenkontur (45) entlang bewegen muß; die Form der Nockenkontur (45) ist so gewählt, daß sie mit der Rolle (47) auf dem Beförderungshebelglied (10) so zusammenarbeitet, daß der Arm (48a) bei Stellung des Beförderungshebelglieds (10) auf Stelle (C) vom Produkt (4) entfernt ist, und bei Stellung des Beförderungshebelglieds (10) auf Stelle (D) der Arm (48a) das Produkt (4) ergreift; die Greifstellung des Arms (48a) dauert, bis das Beförderungshebelglied (10) zum zweiten System von Förderern und schweißenden Vorrichtungen (S_{T2}) kommt; die zweite Hebelvorrichtung (52) umfaßt einen zweiten Hebelarm (51), dessen Ende einen Zapfen für eine Rolle (49) trägt, die sich innerhalb einer sechsten gerillten Kontur (50) bewegen kann; die gerillte geschlossene sechste Kontur (50) ist in der Platte (33) ausgeführt; wobei die Rolle (49) an der Kontur (50) so gebunden ist, daß sie sich innerhalb der Kontur (50) bewegen muß; die Form der Nockenkontur (50) ist so gewählt, daß sie mit der Rolle (49) auf dem Beförderungshebelglied (10) so zusammenwirkt, daß der Arm (52a) bei Stellung des Beförderungshebelglieds (10) auf Stelle (C) vom Produkt (4) entfernt ist, und bei Stellung des Beförderungshebelglieds (10) auf Stelle (D) der Arm (52a) das eingewickelte Produkt (4) ergreift, damit das Produkt (4) in das zweite System von Förderern und thermisch verschweißenden Vorrichtungen (ST2) eingeführt wird.

15. Einwickelmaschine nach Anspruch 12, dadurch gekennzeichnet, daß am mindest einer der Hebelvorrichtungen (48,52) mit einem Zapfen (48_{E}) ausgestattet ist; wobei der Zapfen (48_{E}) ein elastisches Gelenk aufweist und zwischen den Armen (48a,52a) und einem Zapfen (52_{S},48_{N}) angeordnet ist.

16. Einwickelmaschine nach Anspruch 12, dadurch gekennzeichnet, daß die Zapfen (48_{N},52_{S}) der Hebelvorrichtungen (48,52) untereinander zu den Armen (48a,52a) der eigenen Hebelvorrichtungen (48,52) gegenüberliegend sind; wobei sich der Zapfen (48_{N}) an der Seite, in der der Arm (52a) angeordnet ist, und der Zapfen (52_{S}) an der Seite, in der der Arm (48a) angeordnet ist, befinden.

17. Einwickelmaschine nach Anspruch 1, dadurch gekennzeichnet, daß die Anzahl von den ersten Radialführungsbahnen (31) der Anzahl von den zweiten zweite Radialführungsbahnen (16) entspricht, wobei die Radialabmessungen des ersten Oberkarussels (11) der Radialabmessungen des zweiten Unterkarussels (9) entsprechen.

18. Einwickelmaschine nach Anspruch 1, dadurch gekennzeichnet, daß die Sicherheitsvorrichtung der ersten thermischen Schweißungseinrichtungen (S_{T1}) eine Winde (85) umfaßt, die mit einem an einer Heizungsstange (54) angeschlossenen Stab (86) und mit einem mit einer Wand (88) eines Behälters (80) festverbundenen Kolben (87) ausgestattet ist; wobei die Winde (85) eine an der Zentralkontrolleinheit der Maschine angeschlossene erste Betätigungsvorrichtung umfaßt; die Winde (85) dient zu den Bewegungen der Heizungsstange (54) von einer ersten Stelle (Z₁) bis zu einer zweiten Stelle (Z₂) und umgekehrt; befindet sich die Winde (85) in der ersten Stelle (Z₁), so ist die Heizungswand (54a) in Berührung mit den gefalteten Rändem (28a,28b) des Einpackstoffbogens (28) zu deren Schweißung; befindet sich die Winde (85) in der ersten Stelle (Z₂), so wird die Heizungswand (54a) von den Rändern (28a,28b) entfernet.

19. Einwickelmaschine nach Anspruch 18, dadurch gekennzeichnet, daß eine Stirnwand (54b) der Heizungsstange (54) Lagerungsnuten (81,82) zur Lagerung von Metallbändern (83,84) aufweist, die zwischen zwei Stützgliedern gespannt sind; die Metallbänder (83,84) weisen eine sehr geringe Wärmekapazität auf, damit sie sehr schnell erhitzt oder gekühlt werden können; die Metallbänder (83,84) dienen zur seitlichen Stützung des Produkts (4) bei der Stellung der Heizungsstange (54) auf der zweiten Stelle (Z₂); die Heizungsstangen (54) besitzen mehrere Leitungen (93), die im Körper der Stange (54) ausgeführt sind; die Eingänge der Leitungen (93) sind mit einer elastischen Leitung (90) für Druckluft verbunden, wobei die Ausgänge derselben Leitungen (93) zu Auslasslöchern (94) führen, die dazu dienen eine Druckluftströmung auf die Metallbändern (83,84) zu blasen; außerdem ist die elastische Leitung (90) mit einem Luftverdichter (91) verbunden und mit Hähnen (92) ausgestattet, die durch eine zweite Betätigungsvorrichtung zur Lieferung oder Absperrung einer Kaltdruckluftströmung auf die Metallbänder (83,84) getrieben werden, wobei die Kaltdruckluftströmung bei der Stellung der Heizungsstange (54) auf der ersten Stelle (Z₁) abgesperrt und bei der Stellung der Heizungsstange (54) auf der zweiten Stelle (Z₂) geblasen wird.

## Revendications

1. Une machine d'enveloppement à vitesse élevée pour la manipulation de produits délicats avec des formes difficiles qui sont encore en phase de durcissement comprend essentiellement:
un groupe central de contrôle de la machine;
une station d'entrée (SE) où arrive un premier ruban transporteur (1) pourvu de ventouses en dépression (5) pour le transport de produits délicats (4) d'une machine à imprimer ou d'une autre installation d'alimentation des produits (4) à la station d'entrée (SE);
un premier ensemble d'organes de transport (T₁) pour transporter les produits (4) de la station d'entrée (SE) à une entrée (C) de la machine (3), les organes de transport (T1) étant pourvus d'organes d'espacement (7) qui se succèdent à distances pré-établies, la machine (3) étant pourvue d'un organe transporteur (42,43) pour feuilles d'un matériau d'enveloppement thermosoudable (28) destinés à envelopper les produits (4);
caractérisée en ce qu'elle comprend en outre:
une première structure tournante supérieure (R1) et une seconde structure tournante inférieure (R2) les structures tournantes (R1,R2) étant soutenues en rotation par une plaque de soutien (3a); la première structure tournante (R1) comprenant les premiers éléments mécaniques et comprenant des éléments mécaniques (10,48,52) qui transfèrent de la position d'entrée (C) à une position dans laquelle commence un second système d'organes de transport et de soudure thermique (ST2); la seconde structure tournante inférieure (R2) comprenant les seconds éléments mécaniques (8) qui transfèrent de la position d'entrée (C) à une position dans laquelle se termine une première trajectoire (A1-A2); ces premiers et seconds éléments mécaniques (8,10,48,52) en se déplaçant selon des trajectoires rectilignes et circulaires (A1-A2,F1-F2,F3-F4,F5-F6,C1,C2); les éléments mécaniques (8,10,48,52) des deux structures tournantes (R1,R2) coopérant entre elles pour transporter le produit (4) le long de la trajectoire rectiligne (A1-A2,F1-F2) et pour l'envelopper sur les trois faces (4a,4c,4d) avec un matériau de conditionnement (28), les autres faces du produit (4) étant enveloppées lorsque les produits sont transportés par les éléments mécaniques (10,48,52) de la structure tournante supérieure (R1);
les premiers éléments de pliage (P1) pour plier le matériau de conditionnement (28) disposé par les éléments mécaniques (8,10,48,52) sur les trois faces (4a,4c,4d) des produits (4) et disposer sur une quatrième face (4e) de chaque produit (4) deux pans superposés (28a,28b) du matériel (28);
les premiers organes de soudure thermique (ST1) pour souder les pans superposés (28a,28b) pliés par les premiers éléments de pliage (P1);
les organes d'enveloppement (Av) pour disposer sur les faces (4f,4g) du produit (4) le matériau de conditionnement (28) afin de terminer l'enveloppement du produit (4) avec le matériau de conditionnement (28);
le second système d'organes de transport et soudure thermique (ST2) étant capable de terminer la soudure du matériau de conditionnement (28) enroulé sur les faces (4f,4g) produit et de transporter les produits (4) complètement enveloppés à la station de sortie (SU) de la machine.

2. Une machine d'enveloppement selon la Rev.1 caractérisée en ce que le premier ensemble d'organes de transport (T1) est constitué d'une courroie centrale (2) et de deux courroies latérales (6,6a); une courroie au moins (2,6,6a) présentant un plan supérieur (2d) d'appui, disposé à une hauteur très proche de la hauteur à laquelle se trouve la face inférieure d'un produit (4) soutenu par une ventouse (5); les courroies (2,6,6a) étant portées en avancement par des organes de renvoi à des vitesses de translation constantes très proches, en intensité et direction, de la vitesse de translation du ruban (1); le plan d'appui (2d) ayant une dimension transversale inférieure à la dimension du produit (4) prise en considération dans le sens de l'avancement des courroies (2,6,6a) et se trouvant légèrement plus en haut des courroies (2,6,6a) auxquelles elle n'appartient pas; les courroies (2,6,6a) dont le plan d'appui (2d) étant plus court que les autres courroies (2,6,6a) et n'intéressant pas l'entrée (C) des structures (R1,R2).

3. Une machine d'enveloppement selon la Rev.2, caractérisée en ce que les courroies (2,6,6a) les plus longues ont une vitesse d'avancement légèrement supérieure à la vitesse d'avancement des courroies (2,6,6a) plus courtes; pour permettre la mise en place correcte des produits (4) dans les organes d'espacement (7) les courroies (2,6,6a) les plus longues sont équipées de moyens de référence (7) qui se développent perpendiculairement au plan des courroies (2,6,6a) les plus longues et qui définissent loges pour les produits (4) délimitées par les parois souples (7a) des moyens de référence (7); les moyens de référence agissant sur le produit (4) appuyé sur les trois courroies (2,6,6a) pour en porter la face postérieure (4b) au contact d'une paroi (7a), le contact ayant lieu dans une position (B) qui se trouve entre la station d'entrée (SE) et l'entrée (C) de la machine (3); les moyens de référence (7) étant en phase avec les éléments mécaniques (8,10,48,52), pour obtenir que les produits (4) qui ont atteint et dépassé la position (B) soient déjà en phase avec les éléments mécaniques (8,10,48,52), de la machine (3).

4. Une machine d'enveloppement selon la Rev.3, caractérisée en ce que n'importe quel moyen de référence (7) appartenant à une des courroies les plus longues (6) est parfaitement aligné sur une direction perpendiculaire à la direction d'avancement des courroies (2,6,6a) avec un moyen de référence (7) appartenant à l'autre courroie plus longue (6a).

5. Une machine d'enveloppement selon la Rev.1, caractérisée en ce que la première structure supérieure (R1) est constituée par un tourniquet supérieur (11) formé par plusieurs premiers chariots (30) qui soutiennent des premiers éléments à levier (10) tournant avec le tourniquet (11) la seconde structure inférieure (R2) étant constituée par un tourniquet inférieur (9) formé de plusieurs seconds chariots (15) qui soutiennent des seconds éléments à levier (8) tournant avec le tourniquet (9); les premiers éléments à levier (10) co-opérant avec les seconds éléments à levier (8) pour porter les produits (4) de l'entrée (B) à la station de sortie (SU) de la machine (3); les premiers éléments à levier (10) étant pourvus de moyens à pince (40,41) pour prélever de l'organe transporteur (42,43) des feuilles de matériau de conditionnement (28) en les saisissant par un bord (28a) alors que l'élément à levier (10) passe d'une première position angulaire (P1) à une seconde position angulaire (P2); les moyens à pince (40,41) disposant le matériau (28) sur trois faces (4a,4c,4d) d'un produit (4) et lâchant le bord (28a) durant le passage de l'élément à levier (10) de l'entrée (C) en une position (D) qui se trouve avant les premiers éléments de pliage (P1), pour permettre la mise en place du matériau (28) sur les trois faces (4a,4c,4d) du produit (4).

6. Une machine d'enveloppement selon la Rev.5, caractérisée en ce que les premiers moyens à levier (10) sont pourvus d'une partie plate (10a) tournée vers l'extérieur du tourniquet (11) et qui s'appuie sur la face supérieure du produit enveloppé du matériau (28); les seconds moyens à levier (8) présentant une surface d'appui (8b) sur laquelle s'appuie la face inférieure du produit (4) non enveloppé par le matériau (28); les premiers mécanismes (32,34,36,38) étant prévus pour maintenir parallèle à eux-mêmes les premiers moyens à levier (10) qui se déplacent sur une première trajectoire rectiligne (F1-F2); les seconds mécanismes (18,19,23,24) étant présents pour maintenir parallèles à eux-mêmes les seconds moyens de levier (8) qui se déplacent selon une trajectoire rectiligne (A1-A2) parallèle à la première trajectoire (F1-F2); les trajectoires (F1-F2,A1-A2) commençant à l'entrée (C) et terminant dans la position (D); les trajectoires (F1-F2, A1-A2) étant parcourues par les éléments à levier (8,10) à vitesses constantes.

7. Une machine d'enveloppement selon la Rev.1, caractérisée en ce que les premiers moyens à levier (10) sont solidaires d'éléments à levier (48,52), pourvus de bras (48a,52a) pour soutenir le produit (4) et porter le matériau de conditionnement (28) sur les trois faces du produit (4); les éléments à levier (48,52) étant pourvus d'organes élastiques (48E) qui maintiennent le bras (48a,52a) en contact avec deux faces du produit (4) afin de récupérer les différences de dimensions dues aux tolérances de fabrication des produits; les éléments à levier (48,52) étant conformés de manière à empêcher la formation de faux-plis sur le matériau de conditionnement (28); des profils à came (45-50) effectués dans la plaque (3a) étant mécaniquement reliés aux éléments à levier (48,52) pour commander les mouvements des éléments à levier (48,52).

8. Une machine d'enveloppement selon la Rev. 1, caractérisée en ce que les premiers éléments de pliage (P1) pour replier un pan (28a) du matériau (28) sur une quatrième face du produit (4) sont constitués par un organe plieur à levier (53) fixé sur un pivot (53a) soutenu par la plaque (3a) sur un segment de la trajectoire circulaire (C1) parcourue par les premiers éléments à levier (10) et raccordée à la trajectoire rectiligne (F1-F2); un mécanisme de manoeuvre déplace l'organe (53) d'une première position (X1) à une seconde position (X2) et vice versa; l'organe (53) présentant une extrémité recourbée (53b) qui porte un pan (28a) du matériau (28) en contact avec la quatrième face du produit (4).

9. Une machine d'enveloppement selon la Rev.1 caractérisée en ce que les premiers organes de soudure (ST1) sont disposés parallèlement à une troisième trajectoire rectiligne (F3-F4) parcourue par les premiers éléments à levier (10) et raccordée à la première trajectoire circulaire (C1) et présentant un dispositif de sécurité mobile à flux d'air comprimé pour refroidir une surface chauffante (54b) en cas d'arrêt de la machine (3); les premiers organes de soudure (ST1) présentant un élément à angle vif (54a) qui plie le pan (28a) sur la quatrième face du produit (4) et porte le pan (28a) sur un pan (28b) plié par l'organe plieur (53); une barre de refroidissement (55) refroidit la soudure du pan (28b) avec le pan (28a) obtenue par la surface chauffante (54b) et est disposée à la suite de la surface chauffante (54b) et parallèle à la troisième trajectoire rectiligne (F3,F4); après l'intervention des premiers organes de soudure (ST1) et de la barre de refroidissement (55) le matériau de conditionnement (28) ayant la forme d'une soudure tubulaire (4t) dont les extrémités latérales sont encore ouvertes.

10. Une machine d'enveloppement selon la Rev.1, caractérisée par le fait que les organes d'enveloppement (Av) comprennent deux plieurs oscillants à levier (56) dont le point d'appui (56) se situe sur un arbre (56a) qui se développe dans une direction perpendiculaire à une quatrième trajectoire rectiligne (F5-F6) parcourue par les premiers éléments à levier (10) et raccordée à une seconde trajectoire circulaire (C2); l'arbre (56a) étant relié à un cinématisme qui déplace les extrémités des éléments (56) d'une première position (Y1) à une seconde position (Y2) et vice versa; les refouleurs (56c) disposés aux extrémités (56b) des éléments à levier (56) en se déplaçant vers la seconde position (Y2) plient vers l'intérieur de la structure tubulaire (4t) deux portions du matériau (28); à proximité du tourniquet supérieur (11) et sur un segment de la trajectoire (F5,F6) étant disposés deux plieurs stationnaires (57), dont chacun présente un angle vif qui plie une portion de matériau de conditionnement (28) opposé à la portion pliée par le refouleur (56c) alors que le produit (4) transporté de l'élément (10) se met en contact avec l'angle vif; deux plieurs suivants stationnaires étant prévus pour parachever l'enveloppement du produit (4).

11. Une machine d'enveloppement selon la Rev.1, caractérisée en ce que les seconds organes de transport et de soudure thermique (ST2) comprenant un troisième et un quatrième transporteur (60 et 65); le troisième transporteur (60) comprend deux rubans latéraux (60a,60b) fermés sur des poulies (62a,63a,62b,63b); sur les parties actives des rubans latéraux (60a,60b) étant prévues respectivement deux plaques (64a,64b) qui s'étendent longitudinalement sur une très grande partie de la longueur des rubans (60a,60b); les deux plaques (64a,64b) étant contraintes à s'appuyer sur les rubans respectifs par des éléments élastiques (64c,64d,64e,64f) pour augmenter l'adhésion entre les superficies des rubans (60a,60b) sur lesquels sont engagées les faces latérales du produit (4) et ses faces-mêmes; le troisième transporteur (60) étant pourvu d'une entrée à proximité de laquelle le profil à came (45) agit sur le levier (48) pour porter un lever en position (48) de relâchement afin de permettre le passage du produit (4) de l'élément (10) au transporteur (60) et le profil à came (50) maintient le bras (52a) du levier (52) en appui sur la face du produit (4), afin de pousser le produit (4) vers l'entrée du transporteur (60); le troisième transporteur (60) étant pourvu, en outre, d'une sortie disposée en face de l'entrée du quatrième transporteur (65); le quatrième transporteur (65) étant constitué de deux rubans transporteurs latéraux (65a,65b) métalliques très minces, élastiques et d'une bonne conductibilité thermique et fermés respectivement entre deux couples de poulies (67,68,67a,68a); des barres chauffantes (66) étant prévues tant à proximité de l'entrée et dans la partie active du quatrième organe de transport, que dans la partie de retour des rubans (65a,65b): les barres (66) permettent la translation des rubans (65a,65b) qui glissent sur les barres (66) et fournissent la chaleur pour souder la partie non encore soudée du matériau (28); à la suite de la barre (66) mais seulement dans la partie active des rubans métalliques (65a,65b) étant présents des éléments de refroidissement (72a,72b) sur lesquels s'appuie la partie interne des rubans (65a,65b) pour glisser; le quatrième transporteur (65) étant pourvu d'une sortie disposée en face d'une entrée d'un cinquième transporteur (73) qui éloigne les produits (4) conditionnés par la machine.

12. Une machine d'enveloppement selon la Rev.1, caractérisée en ce que le tourniquet supérieur (11) présente plusieurs de guides radiaux (31) entre chacun des guides (31) étant logé de façon souple un chariot (30) auquel est solidaire une extrémité d'un arbre (35) dont la seconde extrémité supporte un coussinet (34) inséré dans un premier profil gouffré (32) pratiqué dans une plaque (33) solidaire de la plaque (3a); le profil gouffré (32) étant refermé sur lui-même et co-opérant avec le coussinet (34) pour définir les mouvements radiaux du chariot (30); la marche du profil gouffré (32) en définissant les trajectoires rectilignes (F1-F2,F3-F4,F5-F6) et les trajectoires circulaires de raccord (C1-C2) parcourues de l'extrémité du chariot (30) extérieur au tourniquet (11); le tourniquet inférieur (9) présentant un second groupe de guides radiaux (16); entre chacun des guides (16) étant logée de façon souple un chariot (15) auquel reste solidaire une extrémité du petit arbre (17) dont la seconde extrémité soutient un coussinet (18), inséré dans un second profil gouffré (19) pratiqué dans une plaque (20) solidaire de la plaque (3a); le profil gouffré (19) étant refermé sur lui-même et co-opérant avec le coussinet (18) pour définir les mouvements radiaux du chariot (15) définissant les trajectoires (A1-A2,A2-A1) parcourues par les extrémités du chariot (15) extérieur au tourniquet (9).

13. Une machine d'enveloppement selon la Rev.12, caractérisée en ce que l'extrémité du chariot (30) extérieur (11) soutient un pivot (29) pour relier par une rotule à cette extrémité avec un élément de transport à levier (10); l'élément (10) présentant un premier bras délimité par une partie plate (10a) et un second bras solidaire à une extrémité d'un petit arbre (37) dont la seconde extrémité soutient un coussinet (36) inséré dans un troisième profil gouffré (38) pratiqué dans la plaque (33); le profil (38) étant refermé sur lui-même et co-opérant sur le coussinet (36) pour maintenir la partie plate (10a) parallèle à elle-même alors que l'extrémité du chariot (30) extérieur au tourniquet (11) parcourt les trajectoires rectilignes (F1-F2,F3-F4,F5-F6); l'extrémité du chariot (15) extérieur au tourniquet inférieur (9) soutenant un pivot (26) pour relier par une rotule cette extrémité avec un élément de soutien à levier (8); l'élément (8) présentant un premier bras délimité par une superficie plate (8a) et un second bras solidaire à une extrémité d'un petit arbre (22), dont la seconde extrémité soutient un coussinet (23) inséré dans un quatrième profil gouffré (24); le profil (24) étant fermé sur lui-même et co-opérant avec le coussinet (23) pour maintenir la surface plane (8a) parallèle à elle-même alors que l'extrémité du chariot (15) extérieur au tourniquet (9) parcourt les trajectoires (A1-A2,A2-A1).

14. Une machine à enveloppement selon la Rev.12, caractérisé en ce que le premier élément de levier (48) présente un second bras (46) dont l'extrémité soutient un pivot par un rouleau (47) qui entre en contact avec un cinquième profil de came (45) qui se développe dans le pourtour de la plaque (33) et qui est refermé sur lui-même; le rouleau (47) étant mécaniquement contraint à parcourir le profil (45) qui est conformé de façon à co-opérer avec le rouleau (47) afin que, lorsque l'élément (10) se trouve dans la position (C) le bras (48a) saisisse le produit (4) en maintenant cette position de l'acte de saisir jusqu'à ce que l'élément (10) atteigne les seconds organes de transport et soudure thermique (ST2); le second organe à levier (52) présentant un second bras de levier (51) dont l'extrémité soutient un pivot par un rouleau (49) qui est introduit dans un sixième profil gouffré (50); le profil (50) se développant dans la plaque (33) et étant refermé sur lui-même; le rouleau (49) étant mécaniquement contraint à parcourir le profil (50) qui est conformé de manière à co-opérer avec le rouleau (49) afin que, lorsque l'élément (10) se trouve dans la position (C) le bras (52a) soit loin du produit (4) et quand l'élément (10) se trouve dans la position (D) le bras (52a) ait saisi le produit (4) enveloppé par le matériau (28) jusqu'à l'insérer dans les seconds organes de transport et soudure thermique (ST2).

15. Une machine à enveloppement selon la Rev.12, caractérisée en ce qu'au moins un des moyens à levier (48,52) est pourvu d'un pivot à rotule élastique (48E) disposée entre le bras de levier (48a,52a) et le pivot (52S,48N).

16. Une machine d'enveloppement selon la Rev. 12, caractérisée en ce que les pivots (48N,52S) des leviers (48,52) sont disposés en vis à vis par rapport aux bras (48a,52a) des leviers respectifs (48,52); le pivot (48N) se trouvant dans la partie occupée du bras (52a) et le pivot (52S) se trouvant dans la partie occupée par le bras (48a).

17. Une machine d'enveloppement selon la Rev. 1, caractérisée en ce que le premier groupe de guides radiaux (31) est égal au second groupe des guides radiaux (16), les dimensions radiales du tourniquet supérieur (11) étant égales aux dimensions radiales du tourniquet inférieur (9).

18. Une machine à enveloppement selon la Rev.1, caractérisée en ce que le dispositif de sécurité des premiers organes de soudure thermique (ST1) est constitué par un cric (85) pourvu d'une tige (86) solidaire à la barre (54) et d'un piston (87) solidaire à une paroi (88) d'une loge (80); le cric (85) étant doté d'un premier dispositif d'actionnement relié au groupe central de contrôle de la machine; le cric (85) en déplaçant la barre (54) d'une première position (Z1) pour laquelle la paroi (54a) est au contact avec les pans (28a,28b) repliés pour la soudure à une seconde position (Z2) pour laquelle la paroi n'est pas en contact avec les pans (28a,28b) et vice-versa.

19. Une machine d'enveloppement selon la Rev. 18, caractérisée en ce que la barre (54) présente sur sa surface frontale (54b) des loges concaves (81,82) pour les rubans métalliques (83,84) tendus entre des éléments de soutien et ayant une capacité thermique très faible de manière à absorber et céder la chaleur dans de très brefs délais; ces rubans métalliques (83,84) servent pour l'appui du produit (4) lorsque la barre (54) se trouve dans la seconde position (Z2); la barre (54) présentant un ensemble de plusieurs canalisations internes (93), dont les entrées sont reliées à un conduit élastique à air comprimé (90) et dont les sorties sont reliées à des bouches de sortie (94) pour envoyer des jets d'air froid vers les rubans (83,84); les conduits (90) étant reliés à un compresseur d'air (91) et étant équipés de robinets (92) contrôlés par un second dispositif d'actionnement pour envoyer ou intercepter un courant d'air comprimé à basse température dirigé vers les rubans (83,84); l'interception étant effectuée lorsque la barre (54) se trouve dans la première position (Z1) et l'envoi ayant lieu lorsque la barre (54) se trouve dans la seconde position (Z2).
